# EUROPEAN PATENT APPLICATION

(11) **EP 2 463 756 A1**
(43) Date of publication of application: **13.06.2012**
(21) Application number: 09849673.0
(22) Date of filing: 27.09.2009
(51) Int. Cl.: G06F 3/041

(54) **TOUCH CONTROL DISPLAY ABLE TO REMOVE TOUCH CONTROL IMPACT ON DISPLAY**

(71) Applicant: Inferpoint Systems Limited, Road Town, Tortola (VG)
(72) Inventor: CHEN, Qiliang, Guangdong 518052 (CN); LIU, Haiping, Guangdong 518052 (CN); LI, Dehai, Guangdong 518052 (CN)
(74) Representative: Moore, Graeme Patrick
(86) International application number: PCT/CN2009/074252
(87) International publication number: WO 2011/035485

(57) **Abstract**

A touch control display able to remove touch control impact on display is disclosed, which includes: an active liquid crystal display screen, a display driving circuit, a touch control circuit and a display/touch control signal strobe output circuit or a display/touch control signal load circuit. One substrate of the display screen is provided with a row and column electrode set, and another substrate of the display screen is provided with a common electrode. There is a frame blanking time period between each two display scanning time periods of the electrode of the display screen. In this time period, the display screen does not execute the display driving, the scan to the row electrode is stopped, the column electrode and COM electrode maintain in original outputting state or certain preset outputting signal, and some or all of the active elements in the display screen are on cut-off state. In the period of transmitting the touch control signal by the display screen electrode, the instantaneous potential difference of the applied touch control signal between each electrode enables the active elements to keep in the cut-off state, and removes the touch control signal impact on display.

## Description

### Field of the Invention

The present invention relates to a touch screen and a Flat Panel Display (FPD), and more particularly to a touch display.

### Related Art

Till now, the touch screen has already been widely applied in personal computers, smart phones, public information, intelligent household appliances, industrial control, and other fields. In the current touch field, the resistive touch screen, photoelectric touch screen, ultrasonic touch screen, and planar capacitive touch screen are mainly developed, and in recently years, the projected capacitive touch screen is developed rapidly. However, currently, the touch screens have their own technical disadvantages, such that although the touch screens have been widely adopted in some special occasions, the touch screens cannot be applied to common display screens.

The display screen and the touch screen are twinborn, and in the prior art, the display screen and the touch screen usually bear display and touch tasks separately. Currently, the separated FPD having the touch function includes a display screen, a display driver, a touch screen, a touch signal detector, a backlight source, and other members. The touch screen includes a resistive type, a capacitive type, an electromagnetic type, an ultrasonic type, a photoelectric type, and other types applying different sensing principles. The display screen includes a passive Liquid Crystal Display (LCD) screen (TN/STN-LCD), an active LCD screen (Thin Film Transistor (TFT)-LCD), an Organic Light Emitting Diode (OLED) display screen (AM-OLED), a Plasma Display Panel (PDP) screen, a carbon nanotube display screen, and e-paper. In the FPD having the touch screen, the separated touch screen and display screen are laminated, the touch screen detects a planar position of a touch point, and a cursor on the display screen is enabled to perform positioning following the touch point. The lamination of the touch screen and the display screen increases the thickness, weight and cost of the touch FPD. When the touch screen is placed in front of the display screen, reflection generated by a sensing line of the touch screen leads to non-uniform display and reduction in the display contrast under a strong external light environment, thereby impacting the display effect. The development trend is to integrate the touch pad and the display screen, so as to make the FPD having the touch function lighter and thinner.

It is necessary to find a solution to solve the problem of complex structure, so as to improve the reliability and display effect and reduce the thickness and cost of the FPD having the touch function, and implement the touch function of the FPD through a simple method.

Chinese Patent Application No. 2006100948141 entitled "Touch Flat Panel Display" and Chinese Patent Application No. 2006101065583 entitled "Flat Panel Display Having Touch Function" respectively disclose a connection manner between a touch detection circuit and a display screen electrode, in which an analog switch and a loading circuit enables the display screen electrode to transmit a display driving signal or transmit and sense a touch signal, display driving and touch detection time division multiplex or simultaneously share the display screen electrode, and the display screen electrode is used for both display driving and touch detection, such that the concept of "touch FPD" is creatively proposed.

Chinese Patent Application No. 2009102035358 entitled "Realization of Driving of Touch Flat Panel Display", Chinese Patent Application No. 2009101399060 entitled "Realization of Driving of Touch Flat Panel Display", and Chinese Patent Application No. 200810133417X entitled "Touch Flat Panel Display" further improve the touch FPD.

The basic working principle of the touch FPDs disclosed in the above patents is that, two groups of staggered electrodes on a display screen are used as touch sensing electrodes, multiple electrode lines of the electrode groups are connected to a touch excitation source, and the touch excitation source applies Alternating Current (AC) or Direct Current (DC) touch excitation signals to the electrode lines. When a finger of a human being or other touch objects approach to or touch a certain electrode line, a touch system circuit detects the variances of the touch signals on the electrode lines, so as to determine the position of the finger or other touch objects on the display screen. The technology is a brand-new touch detection technology combining displaying with touching, has a distinct cost advantage, and has a broad vista of applications after improvement.

### SUMMARY OF THE INVENTION

The present invention is directed to a touch display, capable of eliminating an impact of a touch signal on display.

Accordingly, the present invention provides a touch display, which includes an active display screen, a display driving circuit, a touch system circuit, and a display/touch signal gating-switch and output circuit or display/touch signal loading and merge circuit capable of enabling a display screen electrode to be used for both display driving and touch detection; in which the touch system circuit has a touch excitation source and a touch signal detection unit; the display/touch signal gating-switch and output circuit enables the display screen electrode to communicate with the display driving circuit to transmit a display driving signal, or to communicate with the touch system circuit to transmit a touch signal, and the display driving and the touch detection time division multiplex the display screen electrode; the display/touch signal loading and merge circuit enables the display screen electrode to simultaneously transmit the display driving signal and the touch signal, and the display driving and the touch detection simultaneously share the display screen electrode; one substrate of the display screen has an active device array and a row electrode group and a column electrode group connected to the active device array, and the other substrate of the display screen has a common (COM) electrode; during a time of transmitting a display signal by the display screen electrode, the display driving circuit sequentially scans the row electrodes of the display screen, and the column electrodes and the COM electrode of the display screen cooperate to output the corresponding display signal; a vertical blanking time exists between each two display times, during the time, the display screen does not execute the display driving, and stops scanning the row electrodes, the display driving circuit outputs non-selected signals for all the row electrodes, the column electrodes and the COM electrode maintain an original output state or a certain preset output signal, and a part or all of active devices of the display screen are in an off state; during the time of transmitting the display signal by the display screen electrode, due to a transient potential difference of the applied touch signal between the electrodes, the active devices of the display screen are enabled to maintain the off state, and an impact of the touch signal on display is eliminated.

Further, in preferred embodiments of the present invention:

The enabling a part of the active devices of the display screen to be in the off state means enabling the active devices directly connected to a display pixel of the display screen to maintain the off state.

Due to the transient potential difference of the applied touch signal between electrode lines of the row electrode group and the column electrode group connected to the active device array, all or a part of the active devices of the display screen maintain the off state, and the impact of the touch signal on display is eliminated.

Due to the transient potential difference of the applied touch signal between a part of electrode lines of the row electrode group or the column electrode group connected to the active device array and the COM electrode, the active devices connected to the part of the electrode lines maintain the off state, and the impact of the touch signal on display is eliminated.

The active device array on the substrate of the display screen is a TFT array, row and column electrode lines are respectively connected to gates and sources of TFTs, or respectively connected to the gates and drains of the TFTs, and due to the transient potential difference of the applied touch signal between electrode lines of the row electrode group and the column electrode group connected to the TFT array, all or a part of the TFTs of the display screen maintain the off state.

The active device array on the substrate of the display screen is a TFT array, row and column electrode lines are respectively connected to gates and sources of TFTs, or respectively connected to the gates and drains of the TFTs, and due to the transient potential difference of the applied touch signal between electrode lines connected to the gates of the TFTs in the row electrode lines or the column electrode lines and the COM electrode, all or a part of the active devices of the display screen maintain the off state.

In terms of a touch signal relation between the electrodes to which the touch signal is applied, an average value of the potential difference between the electrodes remains unchanged, so as to avoid a perceptible change in display effect.

During a time of transmitting the touch signal by the display screen electrode, the potential difference of the touch signal among the different electrode groups maintains constant.

Among the times of transmitting the touch signal by the display screen electrode, the potential difference of the touch signal among the different electrode groups remains unchanged.

The touch signal applied to the row and column electrode groups or the COM electrode is an AC signal, or a composite signal of an AC signal and a DC signal.

A waveform of the AC signal component in the touch signal is one of a square wave, a sine wave, a triangular wave, a saw-tooth wave, and other AC waveforms.

A frequency of the AC signal component in the touch signal is 10 kHz or above 10 kHz.

The active display screen is one of a TFT-LCD or other active LCD screens, an active OLED display screen, and an active carbon nanotube display screen.

Compared with the prior art, the present invention has the following beneficial effects.

In technical solutions of the present invention, through the solution of selecting a reasonable touch excitation signal, it is ensured that TFTs are in an off state under a touch detection state, such that the display effect is not impacted by the touch excitation signal, and the impact is at least controlled to a negligible degree, thereby effectively realizing time division multiplexing of the display screen electrode.

### BRIEF DESCRIPTION OF THE DRAWINGS

FIG. 1 is a typical structural view of a TFT-LCD;
FIG. 2 is a schematic structural view of one display sub-pixel of a TFT-LCD;
FIG. 3 is a timing chart of regular display driving of a TFT-LCD screen;
FIG. 4 is a structural view of a touch display of a TFT-LCD screen;
FIG. 5 is a timing chart of time division multiplexing a display screen electrode;
FIG. 6 is a waveform chart of touch excitation signals according to a first embodiment;
FIG. 7 is a waveform chart of touch excitation signals according to a second embodiment;
FIG. 8 is a waveform chart of touch excitation signals according to a third embodiment;
FIG. 9 is a waveform chart of touch excitation signals according to a fourth embodiment;
FIG. 10 is a waveform chart of touch excitation signals according to a fifth embodiment;
FIG. 11 is a waveform chart of touch excitation signals according to a sixth embodiment;
FIG. 12 is a timing chart of time division multiplexing a display screen electrode according to a seventh embodiment and an eighth embodiment;
FIG. 13 is a waveform chart of touch excitation signals according to the seventh embodiment and the eighth embodiment;
FIG. 14 is a diagram of an order of arrangement of positive Liquid Crystal (LC) material molecules under an external field;
FIG. 15 is a diagram of an order of arrangement of negative LC material molecules under an external field;
FIG. 16 is a timing chart of time division multiplexing a display screen electrode according to a ninth embodiment;
FIG. 17 is a timing chart of time division multiplexing a display screen electrode according to a tenth embodiment;
FIG. 18 is an equivalent circuit diagram when a finger touches a display screen;
FIG. 19 is a curve diagram in which a leakage current Δi of a touch signal generated by touch is changed with a frequency;
FIG. 20 is an equivalent circuit diagram when a finger touches a display screen, when a COM electrode is disposed on a glass substrate;
FIG. 21 is a waveform chart of a touch excitation source and a touch signal of a touch signal sampling point, when the touch excitation signal is a square wave;
FIGs. 22a, 22b, and 22c are schematic views of a complete synchronizing procedure of touch detection, when the touch excitation signal is a square wave;
FIG. 23 is a waveform chart of a touch excitation source and a touch signal of a touch signal sampling point, when the touch excitation signal is a sine wave;
FIGs. 24a, 24b, and 24c are schematic views of a complete synchronizing procedure of touch detection, when the touch excitation signal is a sine wave;
FIG. 25 is a structural view of a touch signal detection unit of a transient value measurement method;
FIG. 26 is a structural view of a touch signal detection unit of a transient value measurement method;
FIG. 27 is a structural view of a touch signal detection unit of a transient value measurement method;
FIG. 28 is a structural view of a touch signal detection unit of an effective value measurement method;
FIG. 29 is a structural view of a touch signal detection unit of an effective value measurement method;
FIG. 30 is a structural view of a touch signal detection unit of an effective value measurement method;
FIG. 31 shows time characteristics of a touch signal of a touch signal sampling point, when a touch excitation signal is a square wave;
FIG. 32 is a structural view of a touch signal detection unit of a time characteristic measurement method;
FIG. 33 is a structural view of a touch signal detection unit of a time characteristic measurement method;
FIG. 34 is a structural view of a touch signal detection unit of a phase shift measurement method;
FIG. 35 is a structural view of a touch signal detection unit of a phase shift measurement method;
FIG. 36 is a schematic view of a detection sequence of a touch detection manner of single-channel sequential scanning;
FIG. 37 is a schematic view of a detection sequence of a touch detection manner of single-channel interval scanning;
FIG. 38 is a schematic view of a detection sequence of a touch detection manner of single-channel coarse scanning and fine scanning;
FIG. 39 is a schematic view of a detection sequence of a touch detection manner of multi-channel sequential scanning;
FIG. 40 is a schematic view of a detection sequence of a touch detection manner of multi-channel interval scanning; and
FIG. 41 is a schematic view of a detection sequence of a touch detection manner of multi-channel coarse scanning and fine scanning.

### DETAILED DESCRIPTION OF THE INVENTION

The present invention is applicable to FPDs having row electrodes and column electrodes, such as an LCD screen, an OLED display screen (AM OLED), a PDP screen, a carbon nanotube display screen, and e-paper.

The content of the specification is illustrated by using a TFT-LCD being a typical representative of active LCDs as an object.

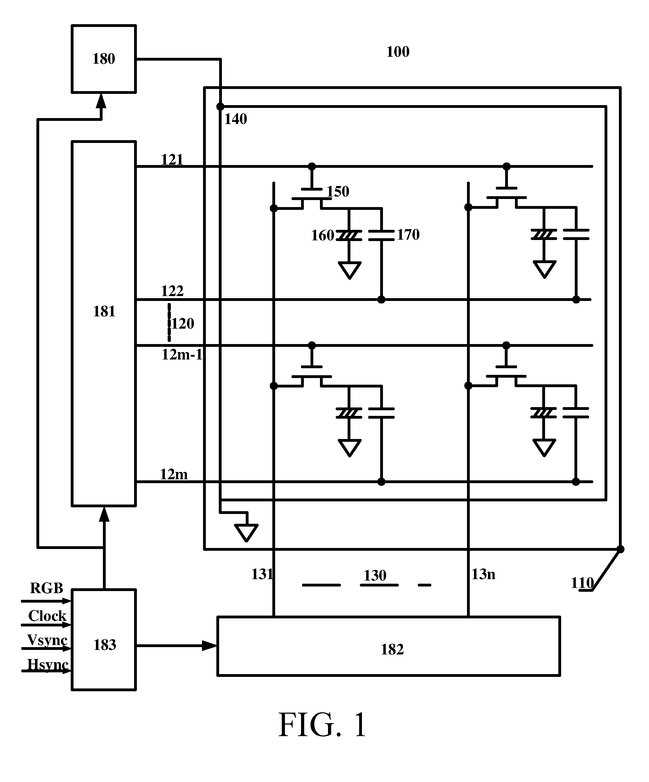

The TFT-LCD screen is a typical representative of Active Matrix (AM) LCDs, and uses a TFT on a substrate as a switch device. A typical structure of the TFT-LCD is as shown in FIG. 1, in which 110 is a TFT LC screen; 120 is scanning row electrodes in a horizontal direction of the LC screen, and 121, 122, ..., 12m-1, and 12m are scanning electrode lines (row electrode lines); 130 is data column electrodes in a vertical direction of the LC screen, and 131, ..., and 13n are data electrode lines (column electrode lines); 140 is a COM electrode, and a potential connected to the COM electrode is used as a reference potential of a LC display pixel; 150 is a TFT on the LC screen, having a gate connected to a scanning line in the horizontal direction, a source connected to a data line in the vertical direction, and a drain connected to a display pixel electrode; 160 is an LC cell corresponding to a display pixel, and is electrically equivalent to one capacitance, and the capacitance is usually defined as CLC; 170 is a Capacitance Storage (Cs) used to store information of the display pixel; 180 is a COM electrode voltage source used to generate a COM electrode reference voltage (Vcom Reference); 181 is a gate (row electrode) driver of the TFT-LCD, and is used to drive scanning lines in the horizontal direction; 182 is a source (column electrode) driver of the TFT-LCD, and is used to drive data lines in the vertical direction; and 183 is a timing controller adapted to receive RGB data, a clock signal Clock, a horizontal synchronization signal Hsync, and a vertical synchronization signal Vsync from an image signal processing chip, and convert the signals, for controlling the source (column electrode) driver and the gate (row electrode) driver to work cooperatively.

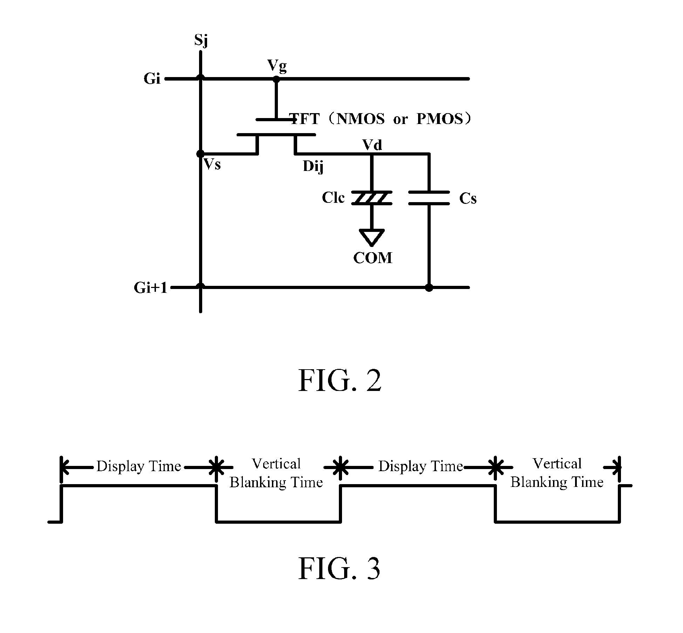

One display pixel is generally formed by three sub-pixels displaying three primary colors being red, green, and blue. A schematic structural view of one display sub-pixel is as shown in FIG. 2, in which Gi represents a row scanning electrode line in the horizontal direction, which is also called a row driving electrode line or gate driving electrode line, and a potential on Gi is Vg; Sj represents a column data electrode line in the vertical direction, which is also called a column driving electrode line or source driving electrode line, and a potential on Sj is Vs; Dij represents a terminal of the TFT connected to the display pixel, which is called a drain, and a potential on Dij is Vd, which is also called a pixel potential; each display pixel has a semi-conductor switch device - TFT disposed thereon, and display scanning can be performed by directly controlling gating through pluses, such that the pixels are independent of one another. A voltage between a gate and a source of the TFT is Vgs, and a voltage between the gate and a drain of the TFT is Vgd. The TFT includes a Negative-channel Metal-oxide Semiconductor (NMOS) type and a Positive-channel Metal-oxide Semiconductor (PMOS) type. Currently, the TFT is used in most of the TFT-LCDs adopts an amorphous silicon (a-Si) manufacturing process, in which a gate insulation layer is SiNx, and easily captures positive charges, and in order to form a trench in an a-Si semiconductor layer, the positive charges in SiNx are utilized to attract electrons so as to form a trench; therefore, the TFT using the a-Si manufacturing process is the NMOS type in most cases. The content of the specification is mainly illustrated by using an NMOS type TFT as a representative, and the PMOS type TFT may conform to the same principle, and thus will not be illustrated separately by way of example.

FIG. 3 is a timing chart of regular display driving of a TFT-LCD screen, in which during a display time, a display driving circuit executes sequential scanning display on the row electrodes, the column electrodes and the COM electrode cooperate to output a corresponding display signal, such that the display screen is in a display state; a vertical blanking time exists between each two display times, during the time, the display screen does not execute the display driving, the display driving circuit stops scanning the row electrodes, and outputs non-selected signals of the TFTs for all the row electrodes, the column electrodes and the COM electrode maintain an original output state or a certain preset output signal, and the TFTs are in an off state. The technical solution of time division multiplexing the display screen electrode in the present invention is to use the vertical blanking time as a time of multiplexing the display screen electrode as a detecting line.

A touch system circuit controls the display driving circuit to cooperatively work with the touch system circuit, such that the display screen electrode communicates with the display driving circuit to transmit a display driving signal, or communicates with the touch system circuit to transmit a touch signal, and display driving and touch detection time division multiplex the display screen electrode. During the display time, the display screen electrode communicates with the display driving circuit to transmit the display driving signal, and the display screen is in the display state. During the touch detection time, the display screen electrode communicates with the touch system circuit to transmit the touch signal, and respectively detects the change of the touch signal flowing through each row electrode line and each column electrode line, and the row electrode line and the column electrode line in which the change of the touch signal satisfies a preset condition are determined as touched electrode lines. A position of a touched point is determined according to a cross-point between the detected touched row electrode line and the detected touched column electrode line.

Sixteenth to nineteenth embodiments of the present invention disclose structures of relevant touch signal detection units.

In addition, first to sixth embodiments of the present invention disclose a solution of selecting a reasonable touch excitation signal so as to prevent the impact of the touch excitation signal on the display effect, seventh to tenth embodiments of the present invention disclose several solutions for preventing the display from impacting the touch, eleventh to thirteenth embodiments of the present invention disclose selection requirements of a frequency of the touch excitation signal, fourteenth and fifteenth embodiments of the present invention disclose a synchronization relation between detection of the touch signal and application of the touch excitation signal during touch detection, and twentieth to twenty-third embodiments of the present invention disclose a plurality of single-channel and multi-channel touch detection scanning manners and sequences. The embodiments are improvements to remaining aspects of the touch system circuit, and whether the embodiments are adopted does not impact the implementation of the technical solutions of the present invention, and does not impact the protection scope of the present invention.

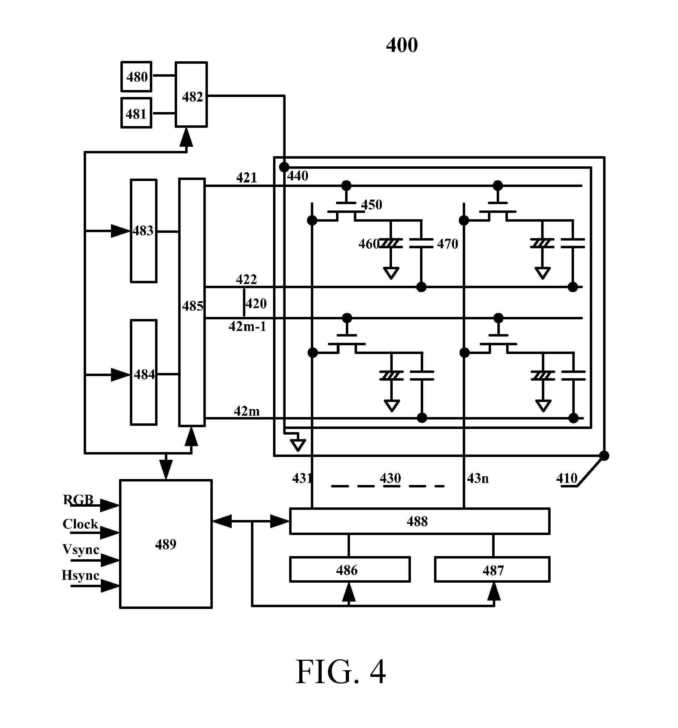

An electrical connection relation of a touch display 400 using the TFT-LCD as a display screen is as shown in FIG. 4. The touch display 400 includes a TFT-LCD screen 410; scanning row electrodes 420 in a horizontal direction of the TFT-LCD screen, having row electrode lines 421, ..., and 42m; data column electrodes 430 in a vertical direction of the TFT-LCD screen, having column electrode lines 431, ..., and 43n; a common electrode layer (COM electrode) 440 of the TFT-LCD screen; TFTs 450 on the TFT-LCD screen, having a gate connected to the scanning row electrode line in the horizontal direction, a source connected to the data column electrode line in the vertical direction, and a drain connected to a pixel electrode; LC cells 460 corresponding to display pixels, in which the LC cell 460 is electrically equivalent to a capacitance, and the capacitance is usually defined as CLC; Css 470, used to store display information of the pixel; a display driving circuit 480 of the COM electrode, a touch excitation source 481 used for the COM electrode during a touch detection state, a COM signal gating and output circuit 482 of the COM electrode; a display scan driving circuit 483 of the row electrodes, a touch system circuit (having a touch excitation source and the touch signal detection unit) 484 of the row electrodes, a row signal gating and output circuit 485 of the row electrodes; a display data driving circuit 486 of the column electrodes, a touch system circuit (having a touch excitation source and a touch signal detection unit) 487 of the column electrodes, a column signal gating and output circuit 488 of the column electrodes; and a timing controller 489. The display scan driving circuit 483 and the touch system circuit 484 are connected to the row electrodes 420 through the row signal gating and output circuit 485; the display data driving circuit 486 and the touch system circuit 487 are connected to the column electrodes 430 through the column signal gating and output circuit 488; and the COM display driving circuit 480 and the touch excitation source 481 are connected to the COM electrode 440 through the COM signal gating and output circuit 482.

The timing controller 489 receives RGB data, a clock signal Clock, a horizontal synchronization signal Hsync, and a vertical synchronization signal Vsync from an image signal processing chip, controls the row display driving circuit 483 connected to the gate, the column display driving circuit 486 connected to the source, and the COM display driving circuit 480 connected to the COM electrode to cooperatively work; also controls the row touch system circuit 484 connected to the source, the column touch system circuit 487 connected to the gate, and the COM touch excitation source 481 connected to the COM electrode to cooperatively work; and allows the row multiplexer 485, the column multiplexer 488, and the COM signal gating and output circuit 482 in the touch display to enable the display screen electrode communicate with the display driving circuit to transmit the display driving signal, or communicate with the touch system circuit to transmit the touch signal, in which the display driving and the touch detection time division multiplex the display screen electrode.

During the display time, the row multiplexer 485, the column multiplexer 488, and the COM signal gating and output circuit 482 in the touch display 400 enable the row electrodes 420, the column electrodes 430, and the COM electrode 440 of the display screen to respectively communicate with the row display driving circuit 483, the column display driving circuit 486, and the COM display driving circuit 480 to transmit the display driving signal, in which the display screen 410 is in the display state.

During the touch detection time, the row multiplexer 485, the column multiplexer 488, and the COM signal gating and output circuit 482 in the touch display 400 enable the row electrodes 420, the column electrodes 430, and the COM electrode 440 of the display screen to respectively communicate with the row touch system circuit 484, the column touch system circuit 487, and the COM touch excitation source 481 to transmit the touch signal, and respectively detect the change of the touch signal flowing through each row electrode line and each column electrode line, and the row and column electrodes of the display screen are switched to be used as touch sensing electrodes; and the row electrode line and the column electrode line in which the change of the touch signal satisfies a preset condition as detected by the row touch system circuit 484 and the column touch system circuit 487 are determined as touched electrode lines. A position of a touched point on the display screen 410 is determined according to a cross-point between the detected touched row electrode line and the detected touched column electrode line.

FIG. 4 shows a typical structure of a touch display, and the illustration of the embodiments in the following are on the basis of the structure.

### First Embodiment

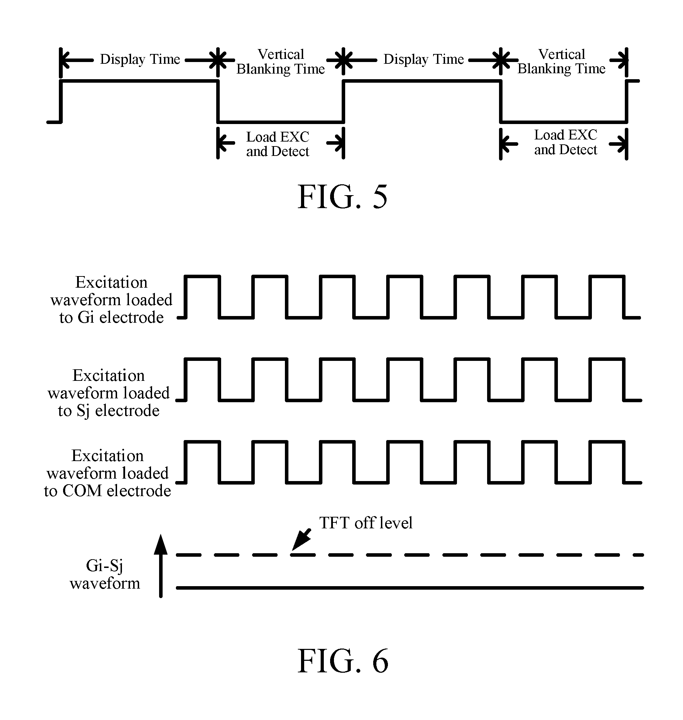

FIG. 5 is a timing chart of a solution of time division multiplexing a display screen electrode in the touch display 400 shown in FIG. 4. A vertical blanking time between each two display frames is used as a touch detection time, during the time, a display screen electrode is switched to be used as a touch sensing electrode, a touch excitation signal is applied to the display screen electrode, and the change of the touch signal on the display screen electrode is detected.

The touch excitation source is a square wave signal source with or without a DC base value. During the touch detection, touch excitation signals as shown in FIG. 6 are respectively applied to three electrodes Gi, Sj, and COM of the TFT as shown in FIG. 2, in which the three applied touch excitation signals are square waves with or without a DC base value, and have the same frequency and the same phase. When the display screen electrode is switched from a display state to a touch detection state, firstly, a transient potential difference Vgs=Vg-Vs of the touch excitation signals applied to the electrode Gi and the electrode Sj is enabled to be lower than an off voltage enabling the TFT to be in an off state; next, appropriate touch excitation signals are applied to the COM electrode and the electrode Gi, such that average values of the potential Vd of the pixel electrode and the potential Vcom of the COM electrode remain unchanged, and the pixel potential Vd satisfies the requirement that the transient potential difference Vgd=Vg-Vd is lower than the off voltage enabling the TFT to be in the off state, so as to ensure that both Vgs and Vgd are lower than the off voltage enabling the TFT to be in the off state, thereby ensuring that under the touch detection state, the TFT can maintain the effective off state, and the voltage of the display pixel is maintained, thus eliminating the impact of the touch detection on the display effect.

The touch excitation source is selected to be a square wave signal source without or without a DC base value, and the square wave signal sources have the same frequency, the same phase, and the same jump amplitude, such that the difference value of the excitation signals applied to the three electrodes Gi, Sj, and COM of the TFT is a constant DC level. In practice, during the touch detection, a desirable detection effect may be obtained by adopting a detection circuit with a simple structure, which can easily generate the signal sources and has high practicability.

### Second Embodiment

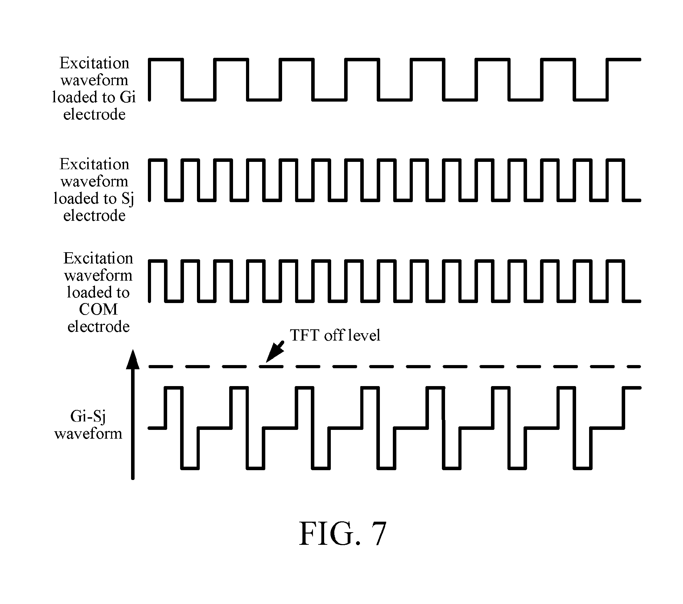

Different from the first embodiment, in this embodiment, the frequencies of the three applied touch excitation signals (as shown in FIG. 7) are different.

### Third Embodiment

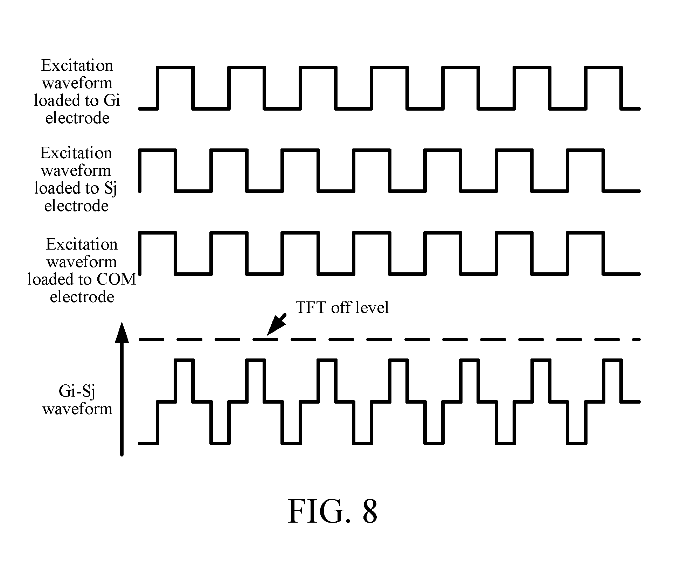

Different from the first embodiment and the second embodiment, in this embodiment, all the three applied touch excitation signals are square waves with or without a DC base value, and have the same frequency but different phases, as shown in FIG. 8.

### Fourth Embodiment

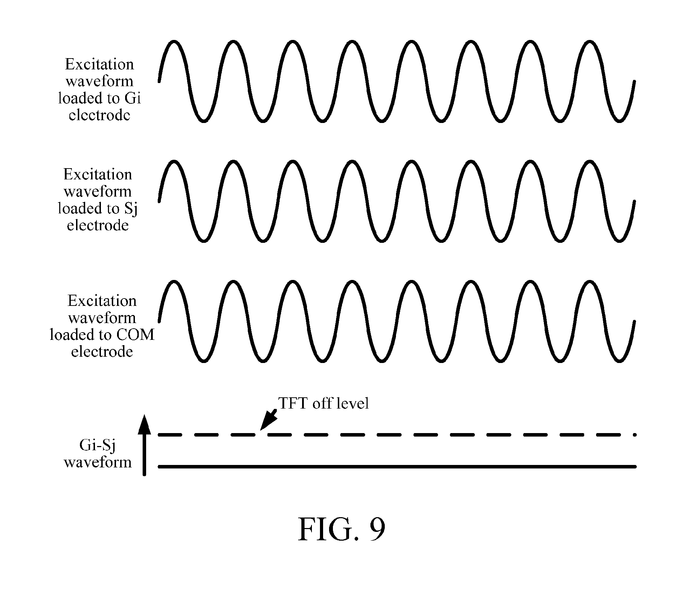

Different from the first embodiment to the third embodiment, in this embodiment, during the touch detection, touch excitation signals as shown in FIG. 9 are respectively applied to the three electrodes Gi, Sj, and COM of the TFT as shown in FIG. 2, in which all the three applied touch excitation signals are sine waves with or without a DC base value (it should be noted that the applied touch excitation signals in the first embodiment to the third embodiment are square waves instead of the sine waves), and have the same frequency and the same phase.

### Fifth Embodiment

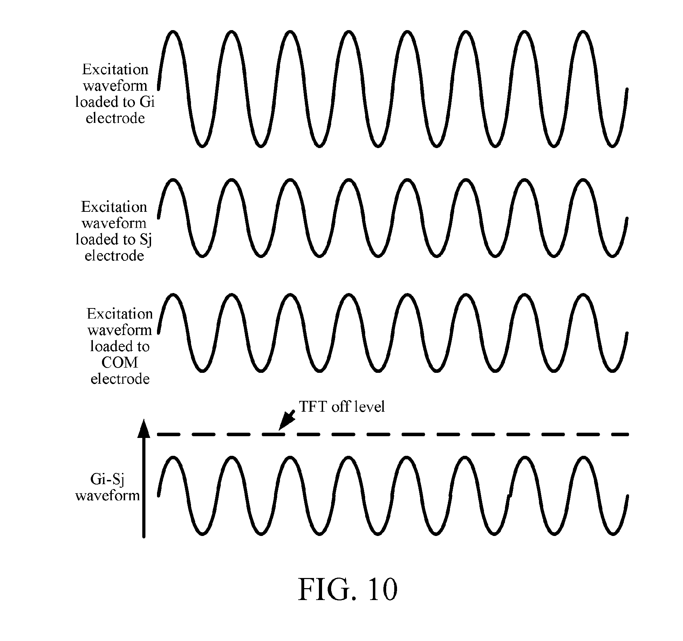

Different from the first embodiment to the fourth embodiment, in this embodiment, during the touch detection, touch excitation signals as shown in FIG. 10 are respectively applied to the three electrodes Gi, Sj, and COM of the TFT as shown in FIG. 2, in which all the three applied touch excitation signals are sine waves with or without a DC base value, and have the same frequency and the same phase, but have different amplitude values of the AC component of the waveform.

### Sixth Embodiment

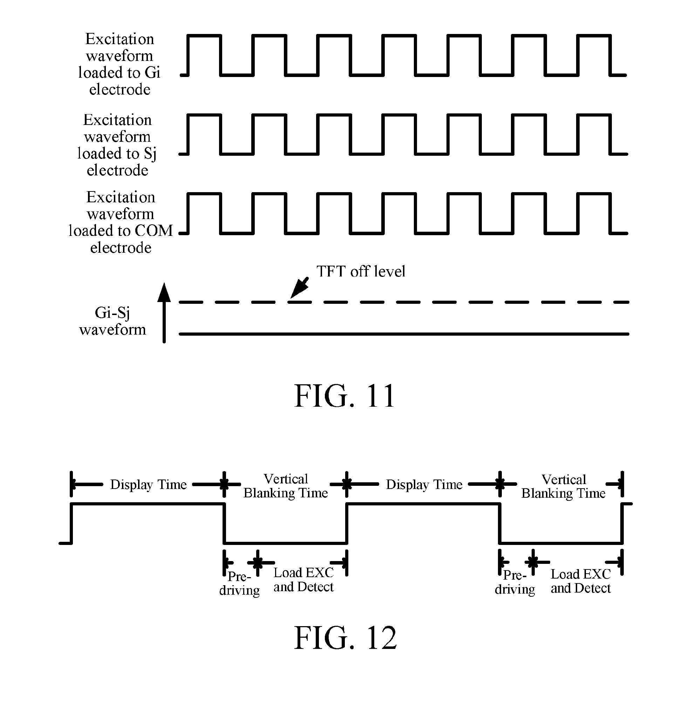

Different from the first embodiment to the fifth embodiment, in this embodiment, during the touch detection, touch excitation signals as shown in FIG. 11 are respectively applied to the three electrodes Gi, Sj, and COM of the TFT as shown in FIG. 2, in which through the combination of the excitation signals, the average values of the potential Vd of the pixel electrode and the potential Vcom of the COM electrode do not remain unchanged, but the average value of the potential difference Vd-Vcom between the two remains unchanged, which can also eliminate the impact of the touch detection on the display effect.

### Seventh Embodiment

The touch display 400 as shown in FIG. 4 adopts the TFT-LCD, and the TFT-LCD adopts a positive LC material. Due to the anisotropy of the dielectric constant of the LC material, the distributed capacitance at each position in the LC cell is changed with the arrangement of LC molecules at the position. The arrangement of the LC molecules at each position in the TFT-LCD depends on an effective value accumulated by a driving voltage at the position, and as the effective values accumulated by the driving voltages at different moments and different positions are different, the arrangements of the LC molecules are different, and accordingly the distributed capacitances are different, further leading to different measurement environments for performing the touch detection. When the driving voltage is applied to the TFT-LCD, due to the driving electrical field, the arrangement state of the LC molecules tends to be parallel to the direction of the electrical field.

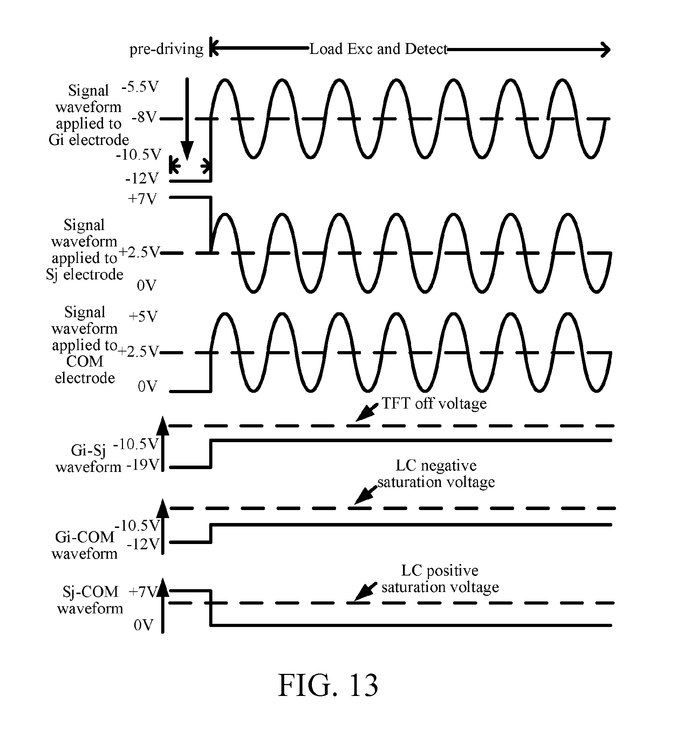

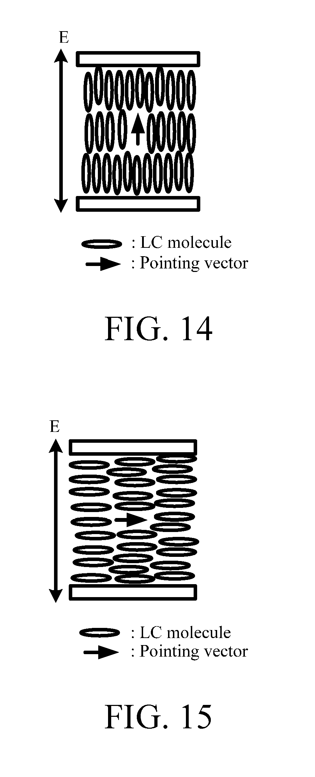

FIG. 12 is another timing chart of a solution of time division multiplexing a display electrode. The vertical blanking time between each two display frames is used as the touch detection time. During the time, firstly, a saturation pre-driving is applied to all the row electrode lines Gi and all the column electrode lines Sj of the display screen simultaneously, in which the waveforms of the signals on the three electrodes Gi, Sj, and COM are as shown in FIG. 13, and the touch excitation signals are sine waves with or without a DC base value. The potential difference Vgs between Gi-Sj is -10.5 V to -17 V, and is lower than the off voltage enabling the TFT to be in the off state, so as to eliminate the impact on display; and the potential difference Vgc between Gi-COM is -10.5 V to -12 V, and the potential difference Vsc between Sj-COM is 5 V, in which both Vgc and Vsc exceed the saturation driving voltage of the LC molecules. Under the function of the applied saturation driving voltage, the orientations of the LC molecules between the row electrode and the COM electrode and the LC molecules between the column electrode and the COM electrode of the LCD screen are quickly changed to be tending to be parallel to the direction of the electrical field. As shown in FIG. 14, when an electrical field E is applied to the positive LC material molecules, the arrangements of the LC molecules are parallel to the direction of the electrical field. Then, the touch excitation signals are respectively applied to the row electrode lines Gi and the column electrode lines Sj of the display screen, and the changes of the touch signals flowing through each row electrode line and each column electrode line are respectively detected. The saturation pre-driving voltage enables the arrangements of the LC molecules to be consistent, thereby eliminating the change of the distributed capacitances resulting from the anisotropy of the dielectric constant of the LC material, and when the changes of the touch signals on each row electrode line and each column electrode line are detected, the measurement environments at different moments and at different positions tend to be consistent, thereby facilitating stability and consistency of the touch detection result.

When an external electrical field is applied to the LC, as the LC molecules are non-polar molecules, the arrangements of the LC molecules of FIG. 14 are not impacted by positive and negative directions of the electrical field, such that during the pre-driving operation, the transient voltage on the electrode may be positive or negative, as long as the saturation driving for the LC is maintained. Therefore, the pre-driving signal and the touch excitation signal applied to the same electrode of the display screen may have the same waveform, the same frequency, and the same amplitude value, or even the pre-driving signal and the touch excitation signal adopt the same signal.

### Eighth Embodiment

Different from the seventh embodiment, in this embodiment, the TFT-LCD adopts a negative LC material, as shown in FIG. 15.

### Ninth Embodiment

The touch display 400 as shown in FIG. 4 adopts the TFT-LCD. As the response speed of the LCD is relatively low, ghosting and streaking easily occur when high-speed image frames are displayed. In order to solve the problem, in a current solution, the display frame frequency is increased, and a "black frame" is inserted after each display frame, such that the "black frame" obstructs the ghost of the original display content. As the so-called black frame is in the frame, when the TFT is in an on state, a saturation driving voltage is applied to the display pixel electrode through the column electrode Sj, such that the arrangements of the LC molecules in the display pixel are consistently in a direction perpendicular to or parallel to the electrical field. When the arrangements of LC molecules in the display pixel are consistent, the arrangements of the LC molecules between the column electrode and the COM electrode in the LCD screen will also be consistent. As the row electrode is a scanning electrode, the effective value of the voltage on each row electrode is the same, and when the arrangements of the LC molecules between the column electrode and the COM electrode are consistent, the distributed capacitance on each row electrode is basically consistent.

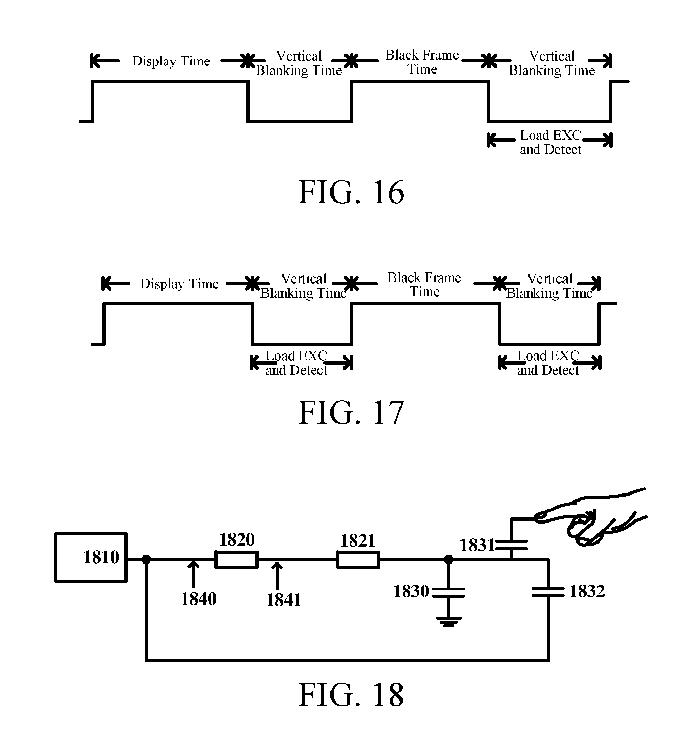

FIG. 16 is a timing chart of a solution of time division multiplexing a display electrode. After the black frame, the touch excitation signals are respectively applied to the row electrode line Gi and the column electrode line Sj of the display screen, and the changes of the touch signals flowing through each row electrode line and each column electrode line are respectively detected. The consistent arrangements of the LC molecules are achieved through the black frame, thereby eliminating the change of the distributed capacitances resulting from the anisotropy of the dielectric constant of the LC material, and when the changes of the touch signals on each row electrode line and each column electrode line are detected, the measurement environments at different moments and at different positions tend to be consistent, thereby facilitating stability and consistency of the touch detection result.

### Tenth Embodiment

The touch display 400 as shown in FIG. 4 adopts the TFT-LCD, and this embodiment is the same as the ninth embodiment in that a "black frame" is inserted after each display frame, such that the "black frame" obstructs the ghost of the original display content.

Different from the ninth embodiment, in this embodiment, FIG. 17 is still another timing chart of a solution of time division multiplexing a display electrode. Both after the normal display frame and after the black frame, the touch excitation signals are respectively applied to the row electrode line Gi and the column electrode line Sj of the display screen, and the changes of the touch signals flowing through each row electrode line and each column electrode line are respectively detected. As such, the vertical blanking time between the display frames is fully utilized, and during each vertical blanking time, the display screen electrode is switched to be used as a touch sensing electrode. Further, the consistent arrangements of the LC molecules are achieved through the black frame, thereby eliminating the change of the distributed capacitances resulting from the anisotropy of the dielectric constant of the LC material. Thus, the impact of inconsistent arrangements of the LC molecules on the detection environment is eliminated.

### Eleventh Embodiment

The touch display 400 as shown in FIG. 4 adopts the TFT-LCD, and a thickness of a glass substrate is 0.3 mm. When a finger of a human being touches a surface of the display screen, the finger forms a coupling capacitance with the display screen electrode through the glass substrate, and an equivalent circuit is as shown in FIG. 18. 1810 is a touch excitation source of a touch excitation signal provided for the display screen electrode, 1820 is a sampling resistor of a touch signal detection unit in a touch system circuit, 1821 is an equivalent resistor of a group of display screen electrodes used as touch sensing electrodes, 1830 is a distributed capacitance of a group of display screen electrodes used as touch sensing electrodes relative to other electrodes of the display screen, 1831 is a coupling capacitance between the finger and a group of display screen electrodes used as touch sensing electrodes, and 1832 is a capacitance between a group of display screen electrodes used as touch sensing electrodes and the COM electrode.

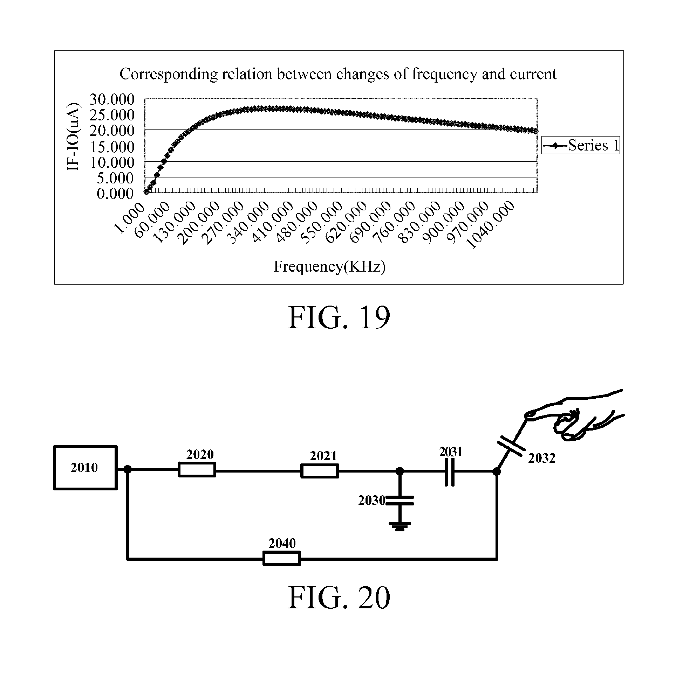

Usually, an overlapping width between the finger and a group of display screen electrodes used as touch sensing electrodes is smaller than 5 mm, the thickness of the glass substrate is 0.3 mm, and the coupling capacitance 1831 is approximately 10 pF. For the common TFT-LCD, a sum of the sampling resistor 1820 and the equivalent resistor 1821 is approximately 30 KΩ, and the touch signal on the display screen electrode used as the touch sensing electrode is partially leaked from the coupling capacitance 1831 to the finger. When the touch excitation source outputs a sine wave of Vrms=5 V, a relation in which the leakage current Δi resulting from the coupling capacitance 1831 is changed with a frequency of the touch excitation source is as shown in FIG. 19. The frequency of the touch excitation signal has a major effect on the capacitive reactance of the coupling capacitance 1831, and for different capacitive reactances, the touch signals of the currents leaked from the finger are different. If the frequency is too low, the capacitive reactance of the coupling capacitance 1831 is too small, and the touch display 400 is not sensitive to the touch of the touch object, thereby easily resulting in false determination of the touch. The selection of the frequency of the touch excitation signal greatly impacts the reliability of the touch detection, particularly when a protection mask is disposed in front of the display.

It may be known from FIG. 19 that in the practical experimental result, when the frequency of the touch excitation source is lower than 10 KHz, the leakage current Δi is relatively small, is not distinct compared with environmental noises, and is difficult to be distinguished from environmental noises. When the frequency of the touch excitation source is set to be 10 KHz or above, it is a reasonable circuit parameter for the use of the display screen electrode as the touch sensing electrode.

### Twelfth Embodiment

The touch display 400 as shown in FIG. 4 adopts the TFT-LCD, and a thickness of a glass substrate is 0.3 mm. When the COM electrode of the LC screen is disposed on the glass substrate facing the operator, the COM electrode may form a certain shielding effect between the row electrodes and column electrodes and the operator. A coupling capacitance is formed between the finger and the COM electrode of the display screen, a coupling capacitance exists between the COM electrode and a group of display screen electrodes used as touch sensing electrodes, and an equivalent circuit is as shown in FIG. 20. 2010 is a touch excitation source of a touch excitation signal provided for the display screen electrode, 2020 is a sampling resistor of a touch signal detection unit in a touch system circuit, 2021 is an equivalent resistor of a group of display screen electrodes used as touch sensing electrodes, 2030 is a distributed capacitance of a group of display screen electrodes used as touch sensing electrodes relative to other electrodes of the display screen, 2031 is a coupling capacitance between the COM electrode and a group of display screen electrodes used as touch sensing electrodes, 2032 is a coupling capacitance between the finger and the COM electrode of the display screen, and 2040 is an equivalent resistor between the excitation source and the COM electrode.

Usually, an overlapping width between the finger and a group of display screen electrodes used as touch sensing electrodes is smaller than 5 mm, the thickness of the glass substrate is 0.3 mm, and the coupling capacitance 2032 is approximately 10 pF. For the common TFT-LCD, a sum of the sampling resistor 2020 and the equivalent resistor 2021 is approximately 30 KΩ. When a finger of a human being touches a surface of the display screen, due to the coupling capacitances 2031 and 2032, the touch signal on the display screen electrode used as the touch sensing electrode partially flows from the coupling capacitance 2031 to the Com electrode, and then is partially leaked from the coupling capacitance 2032 between the COM electrode and the finger to the finger. When a touch excitation signal with a high frequency is selected, the current Δi leaked from the coupling capacitances 2031 and 2032 are relatively large, and the capability of the touch signal of penetrating shielding of the COM electrode is strong, thereby obtaining a desirable touch detection capability.

### Thirteenth Embodiment

The touch display 400 as shown in FIG. 4 adopts the TFT-LCD. Due to the anisotropy of the dielectric constant of the LC material, the distributed capacitance at each position in the LC cell is changed with the arrangement of LC molecules at the position. The arrangement of the LC molecules at each position in the TFT-LCD depends on an effective value accumulated by a driving voltage at the position, and as the effective values accumulated by the driving voltages at different moments and different positions are different, the arrangements of the LC molecules are different, and accordingly the distributed capacitances are different, further leading to different measurement environments for performing the touch detection. However, the anisotropy of the dielectric constant of the LC material have a chromatic dispersion effect changed with the frequency, and usually under the function of an electrical signal of 500 KHz or above, the anisotropy of the dielectric constant basically cannot be realized.

The touch excitation signals with a frequency of 1 MHz or above are applied to the row electrode lines Gi and the column electrode lines Sj of the display screen, and the changes of the touch signals flowing through each row electrode line and each column electrode line are respectively detected. Although the arrangements of the LC molecules at different positions of the TFT-LCD are different, due to the chromatic dispersion effect of the anisotropy of the dielectric constant of the LC material, for the touch excitation signal of 1 MHz or above, the change of the distributed capacitances resulting from the anisotropy of the dielectric constant of the LC material is eliminated, and when the changes of the touch signals on each row electrode line and each column electrode line are detected, the measurement environments at different moments and at different positions tend to be consistent, thereby facilitating stability and consistency of the touch detection result.

### Fourteenth Embodiment

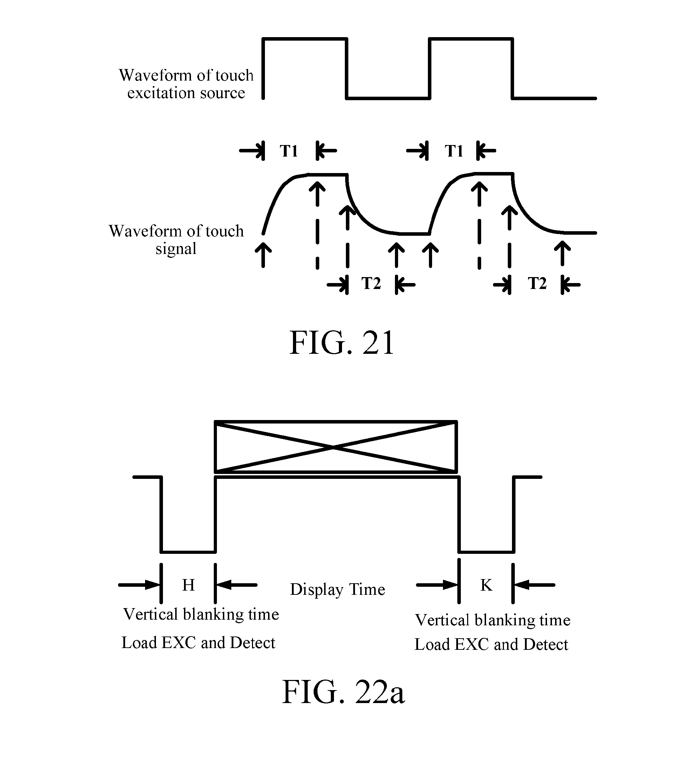

The touch display 400 as shown in FIG. 4 adopts the TFT-LCD. During the practical touch detection, usually the measurement is performed by using a voltage signal as a detection object. An equivalent circuit of measurement is as shown in FIG. 18. 1810 is a touch excitation source of a touch excitation signal provided for the display screen electrode, 1820 is a sampling resistor of a touch signal detection unit in a touch system circuit, 1821 is an equivalent resistor of a group of display screen electrodes used as touch sensing electrodes, 1830 is a distributed capacitance of a group of display screen electrodes used as touch sensing electrodes relative to other electrodes of the display screen, 1831 is a coupling capacitance between the finger and a group of display screen electrodes used as touch sensing electrodes, 1832 is a capacitance between a group of display screen electrodes used as touch sensing electrodes and the COM electrode, 1841 is a touch signal sampling point for measuring voltage changes of the touch signal, and 1840 is a detection reference point for measuring the voltage changes of the touch signal, in which an output end of the touch excitation source 1810 is selected as the reference point here; however, in practice, a desirable detection effect can also be obtained by selecting other potential points as the reference point, for example, a ground end of the touch system circuit, a positive power source end of the touch system circuit, a negative power source end of the touch system circuit, a point in a comparison circuit, or another group of electrode lines on the touch screen. The touch excitation source 1810 is a square wave signal, and 1830 and 1831 are capacitive loads, such that the touch excitation square wave signal generates charging and discharging waveforms on the two capacitances. An output waveform of the touch excitation source 1810 and a waveform of a touch signal of the touch signal sampling point 1841 are as shown in FIG. 21.

In this embodiment, the method for detecting the touch signal adopts a transient value measurement method, in which the potential of the touch signal sampling point 1841 at a specific phase point is measured, and the changes of the potential at the specific phase point detected in different vertical blanking times are compared, so as to obtain touch information; and the specific phase point refers to a specific phase point relative to the waveform of the output end of the touch excitation source 1810. The circuit as shown in FIG. 18 is an RC loop in which the excitation source signal is used as a circuit source, and on a tributary on which the sampling resistor is located, the two capacitances 1830 and 1831 are connected in parallel and then connected in series with the two resistors 1820 and 1821. During the touch detection time, after the touch excitation signal is applied to the circuit as shown in FIG. 18, the circuit generates the charging and discharging procedures to the capacitances. In FIG. 21, T1 and T2 are phase intervals suitable for sampling, the phase interval of T1 at the touch signal sampling point 1841 is a time from start to completion of charging of the capacitance, and the phase interval of T2 is a time from start to completion of discharging of the capacitance.

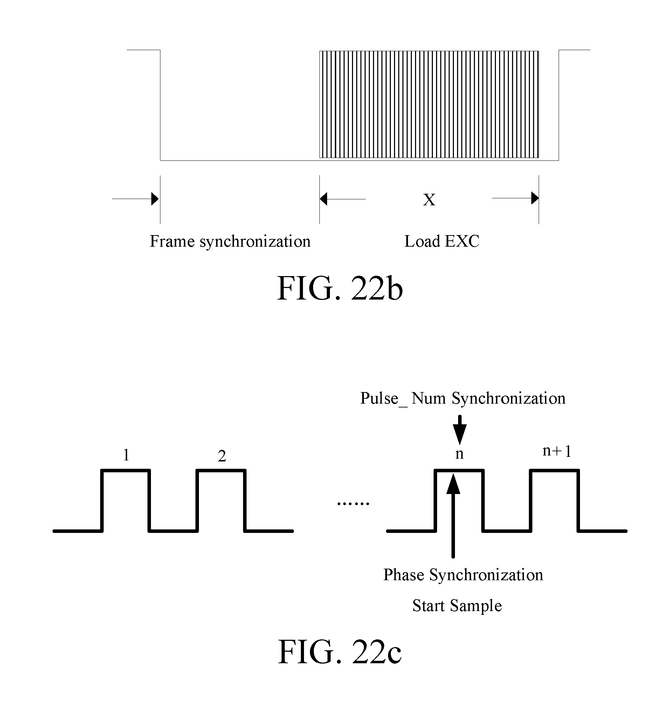

In order to ensure that the detection of the touch signal each time is performed at the specific phase point relative to the waveform of the output end of the touch excitation source 1810, a series of strict synchronization relations need to be maintained. The synchronization relations are formed by three synchronization relations, which are display frame synchronization, touch excitation pulse number synchronization, and touch excitation waveform phase synchronization. In the display frame synchronization, the application of the touch excitation signal each time starts at a certain fixed moment in the vertical blanking time between two display frames; in the excitation pulse number synchronization, from the time when the application of the touch excitation signal to the display screen electrode used as the touch sensing electrode starts, the pulse number of the touch excitation signal is started to be calculated, the moment of obtaining the sample data each time is on the pulse number of the touch excitation signal with the same sequence number; and in the excitation waveform phase synchronization, the moment of obtaining the sample data each time is at the specific phase point relative to the waveform of the output end of the touch excitation source, and the position of the specific phase point is selected in the phase interval T1 or T2. A complete synchronizing procedure is as shown in FIGs. 22a, 22b, and 22c. FIG. 22a is a timing chart of time division multiplexing the display screen, in which, in the display time, the row electrodes, the column electrodes, and the COM electrode of the display screen cooperatively output the corresponding display signal and sequentially perform display scanning, and when the row electrodes, the column electrodes, and the COM electrode of the display screen are multiplexed in a touch detection state in the vertical blanking time (H and K), the square wave touch excitation signals are applied and detection is performed according to detection requirements. FIG. 22b is an enlarged schematic view of H and K (vertical blanking time) in FIG. 22a. As shown in FIG. 22b, at the same fixed moment in the vertical blanking time, the square wave touch excitation signal is started to be applied to the display screen electrode, thereby implementing frame synchronization. FIG. 22c is an enlarged schematic view of X (time of loading the excitation signal and performing detection) in FIG. 22b, in which after the frame synchronization is implemented in the vertical blanking time, the touch excitation signal is started to be applied, the pulse number of the excitation signal is started to be calculated simultaneously, and the sample detection each time is controlled on the pulse number of the touch excitation signal with the same sequence number, thereby realizing the touch excitation pulse number synchronization. In the pulse of the touch excitation signal, the moment of obtaining the sample data each time is in a specific phase relative to the waveform of the output end of the touch excitation source, thereby implementing the touch excitation wave phase synchronization.

### Fifteenth Embodiment

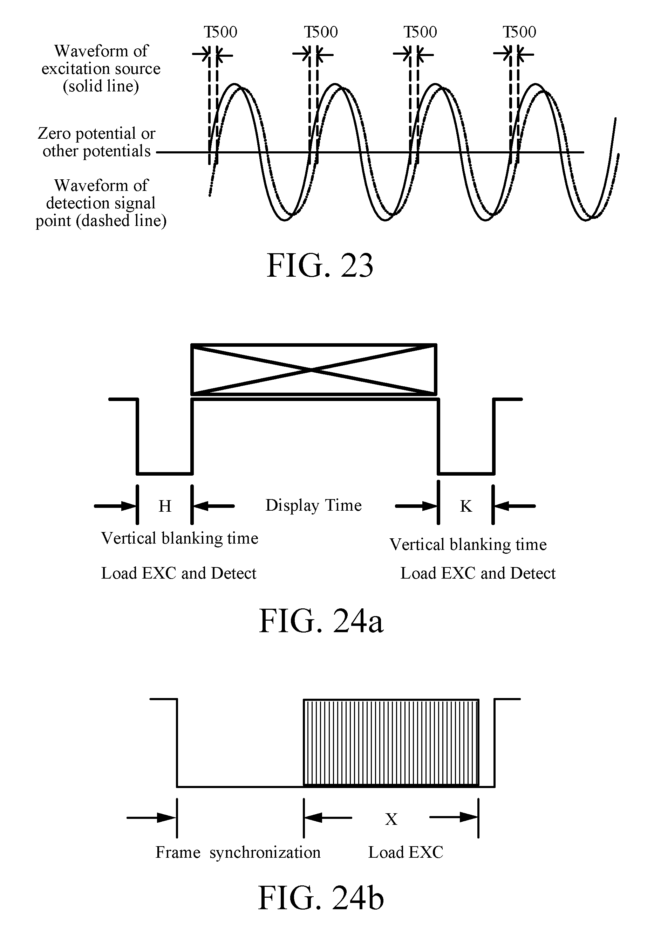

Different from the fourteenth embodiment, in this embodiment, the touch excitation source 1810 is a sine wave signal, and 1830 and 1831 are capacitive loads, such that after the touch excitation source being sine wave is added with the capacitive loads, the waveform at the touch signal sampling point is still the sine wave, but the amplitude and the phase are changed, in which an output waveform of the touch excitation source 1810 and a waveform of the touch signal of the touch signal sampling point are as shown in FIG. 23.

In this embodiment, the method for detecting the touch signal adopts a phase shift measurement method, in which phase shifts of a specific phase point of the touch signal sampling point 1841 in different vertical blanking times are compared, so as to obtain touch information; and the specific phase point refers to a specific phase point relative to the waveform of the output end of the touch excitation source 1810. The circuit as shown in FIG. 18 is an RC loop in which the excitation source signal is used as a circuit source, and on a tributary on which the sampling resistor is located, the two capacitances 1830 and 1831 are connected in parallel and then connected in series with the two resistors 1820 and 1821. During the touch detection time, the touch excitation signal is applied to the circuit as shown in FIG. 18, the amplitude value of the sine wave is reduced and the phase of the sine wave is delayed through the RC loop; when a finger touches the display screen, the coupling capacitance 1831 causes the change of C in the RC loop, and the change of time difference of the crossover point of the sine wave relative to the crossover point of the waveform of the output end of the touch excitation source 1810 is measured at the touch signal sampling point, so as to determine whether touch occurs or not. Changes of the phase shift of the waveform of the touch signal is measured at the touch signal sampling point, or at a peak value point or other phase points of the sine wave.

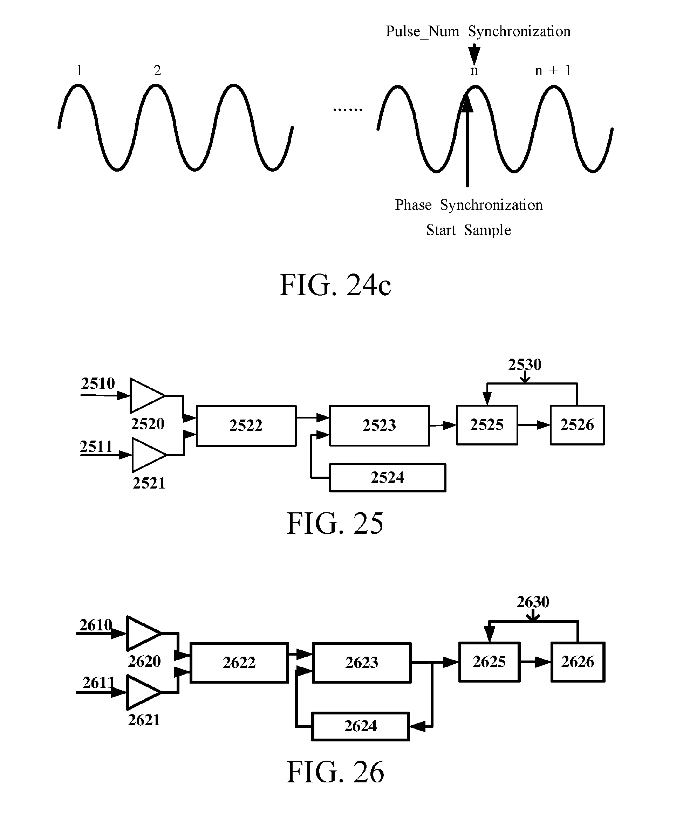

Similarly, in order to ensure that the detection of the touch signal each time is performed at the specific phase point relative to the waveform of the output end of the touch excitation source 1810, a series of strict synchronization relations need to be maintained. The synchronization relations are formed by three synchronization relations, which are display frame synchronization, touch excitation pulse number synchronization, and touch excitation waveform phase synchronization. In the display frame synchronization, the application of the touch excitation signal each time starts at a certain fixed moment in the vertical blanking time between two display frames; in the excitation pulse number synchronization, from the time when the application of the touch excitation signal to the display screen electrode used as the touch sensing electrode starts, the pulse number of the touch excitation signal is started to be calculated, the moment of obtaining the sample data each time is on the pulse number of the touch excitation signal with the same sequence number; and in the excitation waveform phase synchronization, the specific phase point for measuring the waveform of the touch signal at the touch signal sampling point is time compared with the same phase point of the waveform of the output end of the touch excitation source; and the phase shift information of the sine wave is full phase, such that the shift of the same specific phase point is observed each time. A complete synchronizing procedure is as shown in FIGs. 24a, 24b, and 24c. FIG. 24a is a timing chart of time division multiplexing the display screen, in which, in the display time, the row electrodes, the column electrodes, and the COM electrode of the display screen cooperatively output the corresponding display signal and sequentially perform display scanning, and when the row electrodes, the column electrodes, and the COM electrode of the display screen are multiplexed in a touch detection state in the vertical blanking time (H and K), the sine wave excitation signals are applied and detection is performed according to detection requirements. FIG. 24b is an enlarged schematic view of H and K (vertical blanking time) in FIG. 24a. As shown in FIG. 24b, at the same fixed moment in the vertical blanking time, the sine wave touch excitation signal is started to be applied to the display screen electrode, thereby implementing frame synchronization. FIG. 24c is an enlarged schematic view of X (time of loading the touch excitation signal and performing detection) in FIG. 24b, in which after the frame synchronization is implemented in the vertical blanking time, the sine wave touch excitation signal is started to be applied, the pulse number of the excitation signal is started to be calculated simultaneously, and the sample detection each time is controlled on the pulse number of the touch excitation signal with the same sequence number, thereby realizing the touch excitation pulse number synchronization. In the pulse of the sine wave touch excitation signal, the moment of obtaining the sample data each time is in the same specific phase relative to the waveform of the output end of the touch excitation source, thereby implementing the touch excitation wave phase synchronization.

### Sixteenth Embodiment

In the fourteenth embodiment and the fifteenth embodiment, the touch detection is performed on the touch display 400 as shown in FIG. 4 by using a transient value measurement method. The transient value measurement method is to detect the touch signal in a quite short time at the specific phase point, and its main feature lies in quick detection. Three circuit structures for detecting the touch signal by using the transient value measurement method are as shown in FIGs. 25, 26, and 27. The structure of the touch signal detection unit is formed by a signal detection channel, a data sampling channel, and a data processing and timing control unit. The signal detection channel has a buffer, a first level differential amplifier, and a second level differential amplifier. The data sampling channel has an analog-to-digital converting circuit. The data processing and timing control unit is a Central Processing Unit (CPU) or Micro Control Unit (MCU) having a data operation capability and a data output and input interface, and the CPU or MCU has control software and data processing software.

FIG. 25 is a structural view of a touch signal detection unit of the transient value measurement method. 2510 is a signal of a touch signal sampling point, 2511 is a signal of a detection reference point, and after being respectively buffered by a buffer 2520 and a buffer 2521, the signal 2510 of the touch signal sampling point and the signal 2511 of the detection reference point are used as input signals of a first level differential amplifier 2522; and an output of the first level differential amplifier 2522 is used as one of inputs of a second level differential amplifier 2523, 2524 adjusts a voltage output, the voltage output is used as a reference potential, and is connected to the other input of the second level differential amplifier 2523, for subtracting a base value of an output signal of the first level differential amplifier; and the second level differential amplifier 2523 outputs to an analog-to-digital converter (ADC) 2525, 2525 performs synchronous sampling under the control of a synchronization control signal 2530 output by a CPU or MPU 2526, and sends a result of sample conversion to the CPU or MPU 2526, and then, the CPU or MPU performs data processing and touch determination.

FIG. 26 is a structural view of a touch signal detection unit of the transient value measurement method. 2610 is a signal of a touch signal sampling point, 2611 is a signal of a detection reference point, and after being respectively buffered by a buffer 2620 and a buffer 2621, the signal 2610 of the touch signal sampling point and the signal 2611 of the detection reference point are used as input signals of a first level differential amplifier 2622; and an output of the first level differential amplifier 2622 is used as one of inputs of a second level differential amplifier 2623, a feedback adjustment analog circuit 2624 uses an output of the second level differential amplifier 2623 as a feedback input signal and automatically adjusts an output voltage, the output voltage is used as a reference potential, and is connected to the other input of the second level differential amplifier 2623, for subtracting a base value of an output signal of the first level differential amplifier; and the second level differential amplifier 2623 outputs to an analog-to-digital converter (ADC) 2625, 2625 performs synchronous sampling under the control of a synchronization control signal 2630 output by a CPU or MPU 2626, and sends a result of sample conversion to the CPU or MPU 2626, and then, the CPU or MPU performs data processing and touch determination.

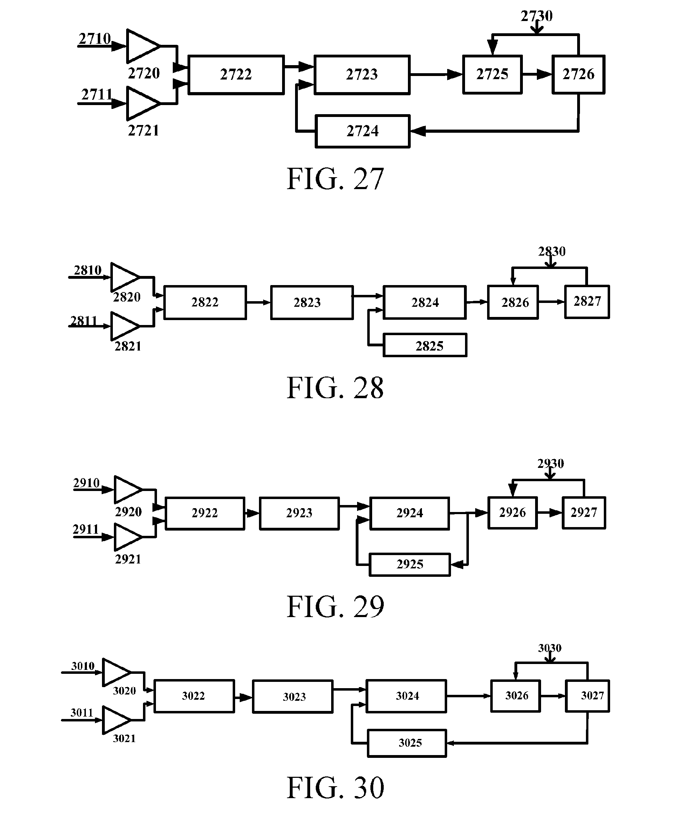

FIG. 27 is a structural view of a touch signal detection unit of the transient value measurement method. 2710 is a signal of a touch signal sampling point, 2711 is a signal of a detection reference point, and after being respectively buffered by a buffer 2720 and a buffer 2721, the signal 2710 of the touch signal sampling point and the signal 2711 of the detection reference point are used as input signals of a first level differential amplifier 2722; and an output of the first level differential amplifier 2722 is used as one of inputs of a second level differential amplifier 2723, a CPU or MPU 2726 sends adjustment data to a digital-to-analog converter 2724 according to a touch operation result, an output voltage of 2724 is used as a reference potential, and is connected to the other input of the second level differential amplifier 2723, for subtracting a base value of an output signal of the first level differential amplifier; and the second level differential amplifier 2723 outputs to an analog-to-digital converter (ADC) 2725, 2725 performs synchronous sampling under the control of a synchronization control signal 2730 output by the CPU or MPU 2726, and sends a result of sample conversion to the CPU or MPU 2726, and then, the CPU or MPU performs data processing and touch determination.

The difference between the three touch signal detection units of the transient value measurement method as shown in FIGs. 25, 26, and 27 lies in that the solution as shown in FIG. 25 is to manually set a reference potential for a secondary differential circuit, and has a capability of basically adjusting the secondary differential circuit; the solution as shown in FIG. 26 is to process an output end signal of the secondary differential circuit by the analog circuit and then feed back the signal to the second differential circuit as the reference potential, and has a capability of adjusting the second differential circuit in an automatic tracking manner; and the solution as shown in FIG. 27 is to process an operation result of the CPU or MCU by the digital-to-analog converting circuit and then feed back the result to the second differential circuit as the reference potential, and has a capability of intelligently adjusting the secondary differential circuit.

For the display screens having different sizes and definitions, the resistance of the electrode is usually above 2 K, and at the connection point between the detection circuit and the electrode line on the touch screen, due to the input impedance of the detection circuit, the touch signal is split, the larger the input impedance of the detection circuit is, the smaller the splitting function on the touch signal is. When the input impedance of the detection circuit is above 2.5 times, the touch signal may reflect the touch action information, such that the input impedance of the signal detection channel on the electrode line needs to be 5 KΩ or above, and as shown in FIGs. 25, 26, and 27, the buffer is disposed at the connection point between the detection circuit and the electrode line on the touch screen, so as to increase the input impedance of the detection circuit.

### Seventeenth Embodiment

In the fourteenth embodiment and the fifteenth embodiment, the touch detection may also be performed on the touch display 400 as shown in FIG. 4 by using an average value measurement method. The average value measurement method is to detect the touch signal in a certain time interval, so as to obtain an average value of the touch signal as a measurement result. Although the average value measurement method is slower than the transient value measurement method, its main feature lies in that a part of high frequency interference can be eliminated, such that the measurement data is more stable, thereby facilitating touch determination. The effective value is one of the average values. Three circuit structures for detecting the touch signal by using the average value measurement method are as shown in FIGs. 28, 29, and 30. The structure of the touch signal detection unit is formed by a signal detection channel, a data sampling channel, and a data processing and timing control unit. The signal detection channel has a buffer, a first level differential amplifier, an effective value measurement circuit, and a second level differential amplifier. The data sampling channel has an analog-to-digital converting circuit. The data processing and timing control unit is a CPU or MCU having a data operation capability and a data output and input interface, and the CPU or MCU has control software and data processing software.

FIG. 28 is a structural view of a touch signal detection unit of the average value measurement method. 2810 is a signal of a touch signal sampling point, 2811 is a signal of a detection reference point, and after being respectively buffered by a buffer 2820 and a buffer 2821, the signal 2810 of the touch signal sampling point and the signal 2811 of the detection reference point are used as input signals of a first level differential amplifier unit 2822; the first level differential amplifier unit 2822 includes a frequency multiplexer, a gating frequency of the multiplexer is the frequency of the touch signal of the excitation source, the frequency multiplexer gates the differentially amplified output, and the output after the gating is used as an input of an effective value converter 2823, an effective value output of 2823 is used as an input of a second level differential amplifier 2824; 2825 adjusts a voltage output, the voltage output is used as a reference potential, for subtracting a base value of the effective value output signal of 2823; and the second level differential amplifier 2824 outputs to an analog-to-digital converter (ADC) 2826, 2826 performs synchronous sampling under the control of a synchronization control signal 2830 output by a CPU or MPU 2827, and sends a result of sample conversion to the CPU or MPU 2827, and then, the CPU or MPU performs data processing and touch determination.

FIG. 29 is a structural view of a touch signal detection unit of the average value measurement method. 2910 is a signal of a touch signal sampling point, 2911 is a signal of a detection reference point, and after being respectively buffered by a buffer 2920 and a buffer 2921, the signal 2910 of the touch signal sampling point and the signal 2911 of the detection reference point are used as input signals of a first level differential amplifier unit 2922; the first level differential amplifier unit 2922 includes a frequency multiplexer, a gating frequency of the multiplexer is the frequency of the touch signal of the excitation source, the frequency multiplexer gates the differentially amplified output, and the output after the gating is used as an input of an effective value converter 2923, an effective value output of 2923 is used as an input of a second level differential amplifier 2924; a feedback adjustment analog circuit 2925 uses an output of the second level differential amplifier 2924 as a feedback input signal and automatically adjusts an output voltage, the output voltage is used as a reference potential, and is connected to the other input end of the second level differential amplifier 2924, for subtracting a base value of the effective value output signal of 2923; and the second level differential amplifier 2924 outputs to an analog-to-digital converter (ADC) 2926, 2926 performs synchronous sampling under the control of a synchronization control signal 2930 output by a CPU or MPU 2927, and sends a result of sample conversion to the CPU or MPU 2927, and then, the CPU or MPU performs data processing and touch determination.

FIG. 30 is a structural view of a touch signal detection unit of the average value measurement method. 3010 is a signal of a touch signal sampling point, 3011 is a signal of a detection reference point, and after being respectively buffered by a buffer 3020 and a buffer 3021, the signal 3010 of the touch signal sampling point and the signal 3011 of the detection reference point are used as input signals of a first level differential amplifier unit 3022; the first level differential amplifier unit 3022 includes a frequency multiplexer, a gating frequency of the multiplexer is the frequency of the touch signal of the excitation source, the frequency multiplexer gates the differentially amplified output, and the output after the gating is used as an input of an effective value converter 3023, an effective value output of 3023 is used as an input of a second level differential amplifier 3024; a CPU or MPU 3027 sends adjustment data to a digital-to-analog converter 3025 according to a touch operation result, an output voltage of 3025 is used as a reference potential, and is connected to the other input end of the second level differential amplifier 3024, for subtracting a base value of the effective value output signal of 3023; and the second level differential amplifier 3024 outputs to an analog-to-digital converter (ADC) 3026, 3026 performs synchronous sampling under the control of a synchronization control signal 3030 output by the CPU or MPU 3027, and sends a result of sample conversion to the CPU or MPU 3027, and then, the CPU or MPU performs data processing and touch determination.

The difference between the three touch signal detection units of the average value measurement method as shown in FIGs. 28, 29, and 30 lies in that the solution as shown in FIG. 28 is to manually set a reference potential for a secondary differential circuit, and has a capability of basically adjusting the secondary differential circuit; the solution as shown in FIG. 29 is to process an output end signal of the secondary differential circuit by the analog circuit and then feed back the signal to the second differential circuit as the reference potential, and has a capability of adjusting the second differential circuit in an automatic tracking manner; and the solution as shown in FIG. 30 is to process an operation result of the CPU or MCU by the digital-to-analog converting circuit and then feed back the result to the second differential circuit as the reference potential, and has a capability of intelligently adjusting the secondary differential circuit.

For the display screens having different sizes and definitions, the resistance of the electrode is usually above 2 K, and at the connection point between the detection circuit and the electrode line on the touch screen, due to the input impedance of the detection circuit, the touch signal is split, the larger the input impedance of the detection circuit is, the smaller the splitting function on the touch signal is. When the input impedance of the detection circuit is above 2.5 times, the touch signal may reflect the touch action information, such that the input impedance of the signal detection channel on the electrode line needs to be 5 KΩ or above, and as shown in FIGs. 28, 29, and 30, the buffer is disposed at the connection point between the detection circuit and the electrode line on the touch screen, so as to increase the input impedance of the detection circuit.

### Eighteenth Embodiment

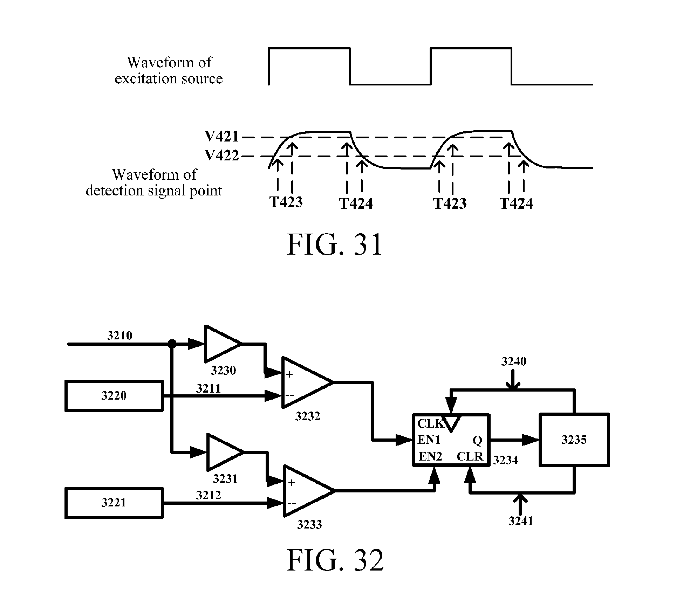

It is mentioned in the fourteenth embodiment that the touch display 400 as shown in FIG. 4 adopts the TFT-LCD, and an equivalent circuit for measurement is as shown in FIG. 18. The touch excitation source 1810 is a square wave signal, and 1830 and 1831 are capacitive loads, such that the touch excitation square wave signal generates charging and discharging waveforms on the two capacitances. An output waveform of the touch excitation source 1810 and a waveform of a touch signal of the touch signal sampling point 1841 are as shown in FIG. 21. In order to illustrate this embodiment, reference numerals of FIG. 21 is redefined, as shown in FIG. 31.

In this embodiment, the touch signal is detected by adopting a time characteristic measurement method, in which the change of a time interval between two fixed potentials during the charging and discharging procedures of the touch signal sampling point 1841 are measured, so as to obtain touch information. As shown in FIG. 31, a time T423 between two fixed potentials V422 and V421 during the charging procedure of the waveform of the touch signal sampling point 1841 is measured, and a time T424 between the two fixed potentials V421 and V422 during the discharging procedure is measured, such that the change of the capacitive load is reflected. When a finger touches the display screen, the coupling capacitance 1831 of the equivalent circuit of FIG. 18 is generated, the capacitive load and the time constant of the circuit are changed, and accordingly the time intervals T423 and T424 between the two fixed potentials are changed. The touch information can be obtained by measuring the change of the time intervals T423 and the T424, and the fixed potentials V421 and V422 are selected from two potentials of the sampling point 1841 during the charging and the discharging procedures.

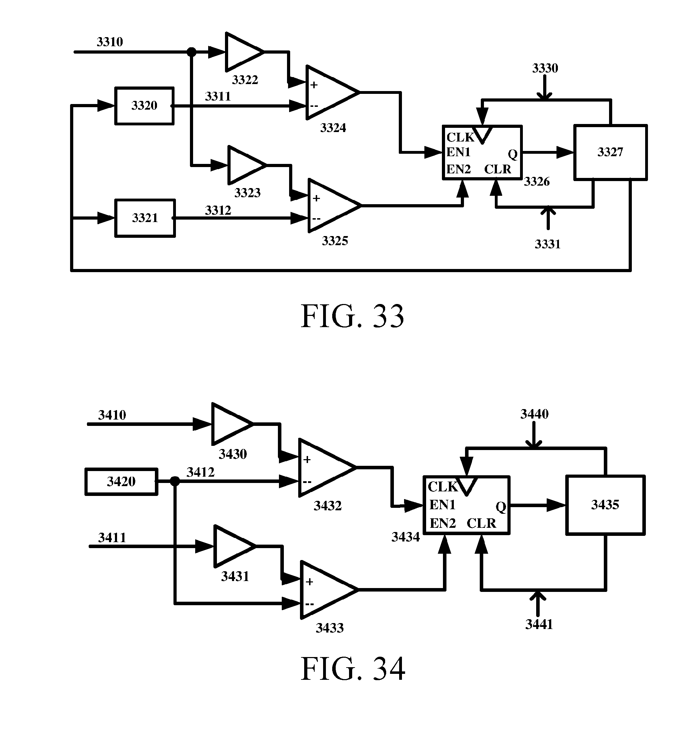

Circuit structures for detecting the touch signal by using the time characteristic measurement method are as shown in FIGs. 32 and 33. The structure of the touch signal detection unit is formed by a signal detection channel, a data sampling channel, and a data processing and timing control unit. The signal detection channel and the data sampling channel each have a buffer, a digital-to-analog converting circuit or voltage adjustment and output unit, a comparator, and a counter. The data processing and timing control unit is a CPU or MCU having a data operation capability and a data output and input interface, and the CPU or MCU has control software and data processing software.

FIG. 32 is a structural view of a touch signal detection unit of the time characteristic measurement method. 3210 is a signal of a touch signal sampling point, 3211 is a fixed potential (V421), and is generated by a voltage adjustment and output unit 3220, 3212 is a fixed potential (V422), and is generated by a voltage adjustment and output unit 3221; the signal 3210 of the touch signal sampling point is buffered and output by a buffer 3230, and enters a comparator 3232 together with the fixed potential 3211 for comparison; the signal 3210 of the touch signal sampling point is buffered and output by a buffer 3231, and enters a comparator 3233 together with the fixed potential 3212 for comparison; a CPU or MCU 3235 generates a counting pulse signal 3240 of a counter 3234, an output potential of the comparator 3233 is used as a start counting signal of the counter 3234, and an output potential of the comparator 3232 is used as a stop counting signal of the counter 3234; and a read value of the counter 3234 after stopping counting is read by the CPU or MCU 3235, and after completing reading, the CPU or MCU 3235 sends a reset signal 3241 to reset the counter 3234 for next reading, and then, the CPU or MCU 3235 performs data processing and touch determination.

FIG. 33 is a structural view of a touch signal detection unit of the time characteristic measurement method. 3310 is a signal of a touch signal sampling point, a CPU or MCU 3327 outputs corresponding data to a digital-to-analog converter 3320 to output a fixed potential 3311 (V421), and outputs data to a digital-to-analog converter 3321 to output a fixed potential 3312 (V422) through program presetting or history detection determination; the signal 3310 of the touch signal sampling point is buffered and output by a buffer 3322, and enters a comparator 3324 together with the fixed potential 3311 for comparison; the signal 3310 of the touch signal sampling point is buffered and output by a buffer 3323, and enters a comparator 3325 together with the fixed potential 3312 for comparison; the CPU or MCU 3327 generates a counting pulse signal 3320 of a counter 3326, an output potential of the comparator 3325 is used as a start counting signal of the counter 3326, and an output potential of the comparator 3324 is used as a stop counting signal of the counter 3326; and a read value of the counter 3326 after stopping counting is read by the CPU or MCU 3327, and after completing reading, the CPU or MCU 3327 sends a reset signal 3331 to reset the counter 3326 for next reading, and then, the CPU or MCU 3327 performs data processing and touch determination.

The difference between the structures for detecting the touch signal by using the time characteristic measurement method as shown in FIGs. 32 and 33 lies in that in the solution of FIG. 32, two fixed potentials V421 and V422 are manually set for the comparator; and in the solution of FIG. 33, the CPU or MCU sets two fixed potentials V421 and V422 for the comparator, the CPU or MCU outputs corresponding data to the digital-to-analog converting circuit as fixed comparison potentials through program setting or after processing the previous measurement result, such that the setting of the fixed comparison potentials V421 and V422 is intelligently adjusted.

### Nineteenth Embodiment

Different from the eighteenth embodiment, in this embodiment, the touch excitation source 1810 is a sine wave signal, and 1830 and 1831 are capacitive loads, such that after the touch excitation source being sine wave is added with the capacitive loads, the waveform at the touch signal sampling point is still the sine wave, but the amplitude and the phase are changed, in which an output waveform of the touch excitation source 1810 and a waveform of the touch signal of the touch signal sampling point are as shown in FIG. 23.

In this embodiment, the method for detecting the touch signal adopts a phase shift measurement method, in which phase shifts of a specific phase point of the touch signal sampling point 1841 in different vertical blanking times are compared, so as to obtain touch information. It may be known that the impact of the touch capacitance may be reflected by measuring the change of the phase, and the change of the phase may be reflected by measuring the time interval, in which a schematic view of detecting the time interval is as shown in FIG. 23. When no finger touches the display screen, due to the distributed capacitance 1830 in FIG. 18, it is detected that the waveform of the touch signal at the touch signal sampling point 1841 has a phase delay relative to the waveform of the output end 180 of the touch excitation source; and when a finger touches the display screen, the coupling capacitance 1831 of the equivalent circuit as shown in FIG. 18 is generated, which increases the capacitive load of the circuit, such that a time T500 between the crossover point at the touch signal sampling point 1841 and the crossover point of the excitation source is increased, that is, a further phase shift is generated. By measuring the change of the time T500, the touch information can be obtained. According to different waveforms of the touch excitation source, the potential corresponding to the specific phase point may be zero point or other potential points.

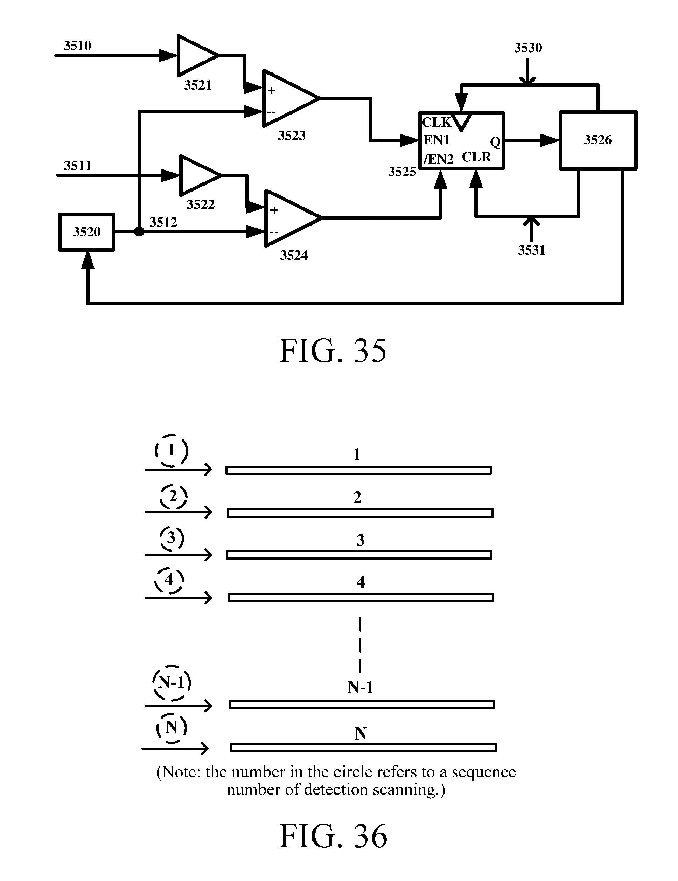

Circuit structures for detecting the touch signal by using the phase shift measurement method are as shown in FIGs. 34 and 35. The structure of the touch signal detection unit is formed by a signal detection channel, a data sampling channel, and a data processing and timing control unit. The signal detection channel and the data sampling channel each have a buffer, a digital-to-analog converting circuit or voltage adjustment and output unit, a comparator, and a counter. The data processing and timing control unit is a CPU or MCU having a data operation capability and a data output and input interface, and the CPU or MCU has control software and data processing software.

FIG. 34 is a structural view of a touch signal detection unit of the phase shift measurement method. 3410 is a signal of a touch signal sampling point, 3411 is a signal of a detection reference point, and 3412 is a potential corresponding to a specific phase point and generated by a voltage adjustment and output unit 3420; the signal 3410 of the touch signal sampling point is buffered and output by a buffer 3430, and enters a comparator 3432 together with the potential 3412 corresponding to the specific phase point for comparison; the signal 3411 of the touch signal sampling point is buffered and output by a buffer 3431, and enters a comparator 3433 together with the potential 3412 corresponding to the specific phase point for comparison; a CPU or MCU 3435 generates a counting pulse signal 3440 of a counter 3434, an output potential of the comparator 3433 is used as a start counting signal of the counter 3434, and an output potential of the comparator 3432 is used as a stop counting signal of the counter 3434; and a read value of the counter 3434 after stopping counting is read by the CPU or MCU 3435, and after completing reading, the CPU or MCU 3435 sends a reset signal 3441 to reset the counter 3434 for next reading, and then, the CPU or MCU 3435 performs data processing and touch determination.

FIG. 35 is a structural view of a touch signal detection unit of the phase shift measurement method. 3510 is a signal of a touch signal sampling point, 3511 is a signal of a detection reference point, a CPU or MCU 3526 outputs corresponding data to a digital-to-analog converter 3520 through program presetting or history detection determination, a potential 3512 corresponding to a specific phase point is an output potential of the digital-to-analog converter 3520; the signal 3510 of the touch signal sampling point is buffered and output by a buffer 3521, and enters a comparator 3523 together with the potential 3512 corresponding to the specific phase point for comparison; the signal 3511 of the touch signal sampling point is buffered and output by a buffer 3522, and enters a comparator 3524 together with the potential 3512 corresponding to the specific phase point for comparison; the CPU or MCU 3526 generates a counting pulse signal 3530 of a counter 3525, an output potential of the comparator 3524 is used as a start counting signal of the counter 3525, and an output potential of the comparator 3523 is used as a stop counting signal of the counter 3525; and a read value of the counter 3525 after stopping counting is read by the CPU or MCU 3526, and after completing reading, the CPU or MCU 3526 sends a reset signal 3531 to reset the counter 3525 for next reading, and then, the CPU or MCU 3526 performs data processing and touch determination.

The difference between the structures for detecting the touch signal by using the phase shift measurement method as shown in FIGs. 34 and 35 lies in that in the solution of FIG. 34, the potential corresponding to the specific phase point is manually set; and in the solution of FIG. 35, the CPU or MCU sets the potential corresponding to the specific phase point through the digital-to-analog converter, and the CPU or MCU sets the potential corresponding to the specific phase point according to the feedback of the digital-to-analog converter through program setting or after processing the previous measurement result, such that the setting of the specific phase point is intelligently adjusted.

The phase characteristic of the touch signal measured in this embodiment is substantially one of the time characteristics.

### Twentieth Embodiment

The touch display 400 as shown in FIG. 4 time division multiplexes the display screen electrode to complete the touch function. The touch display 400 time division multiplexes a part of or all of N display screen electrode lines as touch sensing electrode lines, and performs the touch detection in a detection manner of single-channel sequential scanning. The touch signal detection unit has a touch signal detection channel or a data sampling channel, and sequentially detects the first, the second, ..., until the last N^{th} touch sensing electrode line in the N touch sensing electrode lines by scanning, so as to complete the entire detection procedure of a frame, as shown in FIG. 36.

This is also the most regular and natural touch detection manner.

### Twenty First Embodiment

Different from the twentieth embodiment, in this embodiment, the first, the (i+1)^{th}, the (2i+1)^{th}, ..., until the last N^{th} touch sensing electrode line in the N touch sensing electrode lines are detected by scanning according to a certain fixed interval i, so as to complete the entire detection procedure of a frame.

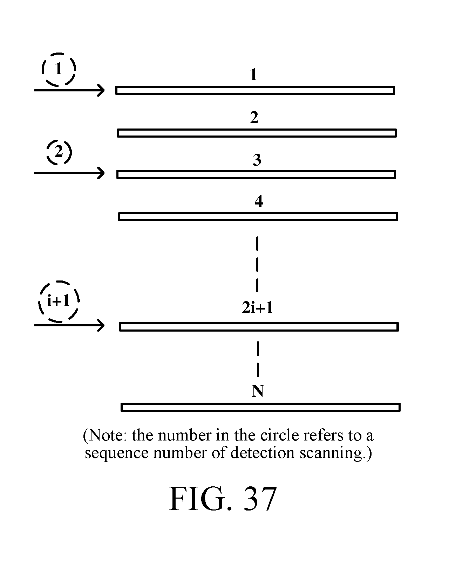

A schematic view of performing scanning detection when i=2, that is, at an interval of one touch sensing electrode line, is as shown in FIG. 37.

### Twenty Second Embodiment

Different from the twenty first embodiment and the twenty second embodiment, in this embodiment, the touch detection is performed in a detection manner of single-channel coarse scanning and fine scanning. The touch signal detection unit has a detection channel or a data sampling channel, the touch sensing electrode lines are divided into several areas each area having i touch sensing electrode lines, one or more touch sensing electrode lines in each area are selected as the touch sensing representative electrodes of the touch sensing electrode lines in the area for performing the touch detection, and the best method is that all of the touch sensing electrode lines in each area are connected in parallel to serve as one touch sensing representative electrode. Firstly, the touch sensing representative electrodes are detected according to the area, and an area where a touch action occurs is determined. Then, fine scanning detection is performed in the area where the touch action occurs, so as to obtain more detailed touch information. The objective of the method is to save the time required for touch detection.

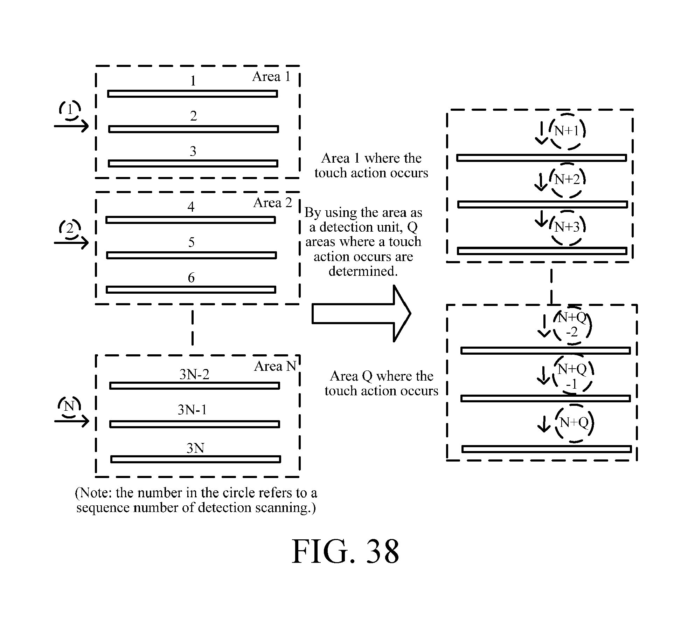

A schematic view of performing scanning detection by single-channel coarse scanning and fine scanning when i=3 is as shown in FIG. 38.

### Twenty Third Embodiment

In this embodiment, the touch detection is performed in a detection manner of multi-channel sequential scanning. The touch signal detection unit has a plurality of touch signal detection channels and a plurality of data sampling channels, all of the touch sensing electrode lines are divided into groups with the same number as that of the touch signal detection channels, and each touch signal detection channel is responsible for detecting one group of the touch sensing electrodes.

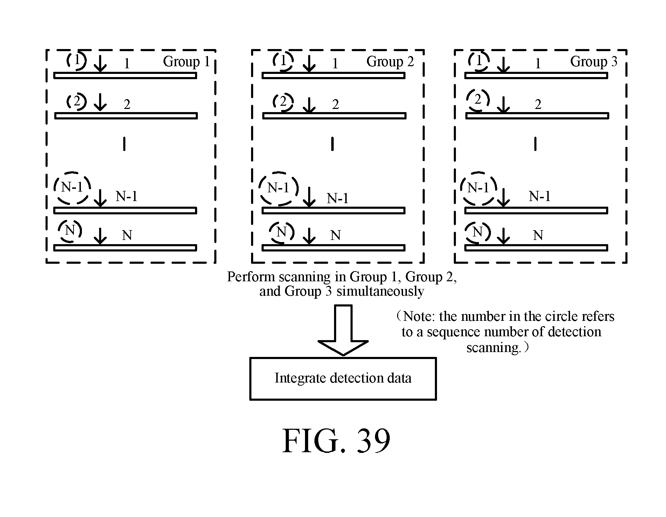

In one solution, the touch signal detection channels simultaneously respectively perform sequential scanning detection in corresponding groups, and detection results of all of the touch signal detection channels are integrated, so as to obtain the touch information of the full screen. FIG. 39 is a schematic view of a detection sequence when three touch signal detection channels exist.

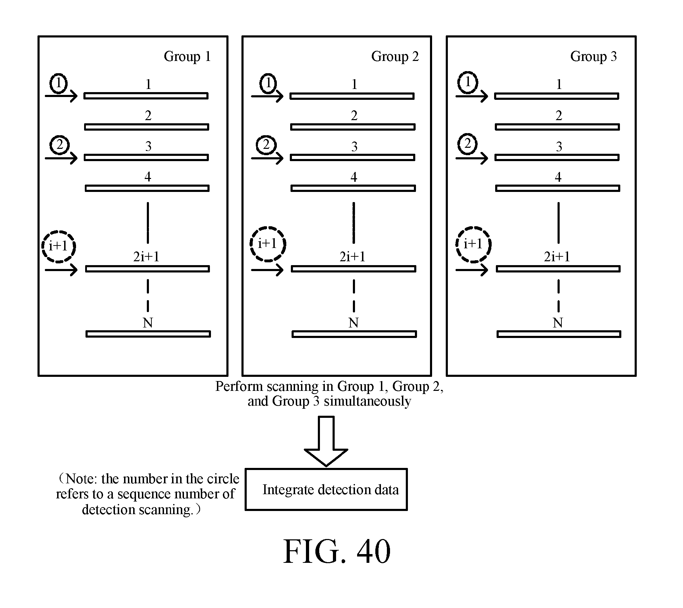

In another solution, the touch signal detection channels simultaneously respectively perform interval scanning detection in corresponding groups, and detection results of all of the touch signal detection channels are integrated, so as to obtain the touch information of the full screen. FIG. 40 is a schematic view of a detection sequence when three touch signal detection channels exist.

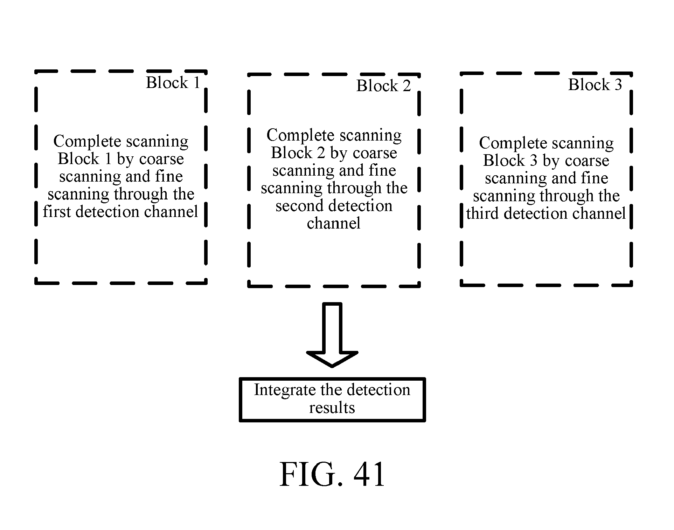

In still another solution, the touch signal detection channels simultaneously respectively perform detection of coarse scanning and fine scanning in corresponding groups, and detection results of all of the touch signal detection channels are integrated, so as to obtain the touch information of the full screen. FIG. 41 is a schematic view of a detection sequence when three touch signal detection channels exist.

The above content gives a further detailed illustration of the present invention in combination with the preferred embodiments, and the present invention is not limited to the illustration. It will be apparent to persons of ordinary skill in the art that various modifications and variations can be made without departing from the scope or spirit of the invention. In view of the foregoing, it is intended that the present invention cover modifications and variations of this invention provided they fall within the scope of the following claims and their equivalents.

## Claims

1. A touch display capable of eliminating a touch impact on display, comprising an active display screen, a display driving circuit, a touch system circuit, and a display/touch signal gating-switch and output circuit or display/touch signal loading and merge circuit capable of enabling a display screen electrode to be used for both display driving and touch detection; wherein the touch system circuit has a touch excitation source and a touch signal detection unit; the display/touch signal gating-switch and output circuit enables the display screen electrode to communicate with the display driving circuit to transmit a display driving signal, or to communicate with the touch system circuit to transmit a touch signal, and the display driving and the touch detection time division multiplex the display screen electrode; the display/touch signal loading and merge circuit enables the display screen electrode to simultaneously transmit the display driving signal and the touch signal, and the display driving and the touch detection simultaneously share the display screen electrode; one substrate of the display screen has an active device array and a row electrode group and a column electrode group connected to the active device array, and the other substrate of the display screen has a common (COM) electrode; during a time of transmitting a display signal by the display screen electrode, the display driving circuit sequentially scans the row electrodes of the display screen, and the column electrodes and the COM electrode of the display screen cooperate to output the corresponding display signal; a vertical blanking time exists between each two display times, during the time, the display screen does not execute the display driving, and stops scanning the row electrodes, the display driving circuit outputs non-selected signals for all the row electrodes, the column electrodes and the COM electrode maintain an original output state or a certain preset output signal, and a part or all of active devices of the display screen are in an off state;
wherein during the time of transmitting the display signal by the display screen electrode, due to a transient potential difference of the applied touch signal between the electrodes, the active devices of the display screen are enabled to maintain the off state, and an impact of the touch signal on display is eliminated.

2. The touch display according to claim 1, wherein
the enabling a part of the active devices of the display screen to be in the off state means enabling the active devices directly connected to a display pixel of the display screen to maintain the off state.

3. The touch display according to claim 1, wherein
due to the transient potential difference of the applied touch signal between electrode lines of the row electrode group and the column electrode group connected to the active device array, all or a part of the active devices of the display screen maintain the off state, and the impact of the touch signal on display is eliminated.

4. The touch display according to claim 1, wherein
due to the transient potential difference of the applied touch signal between a part of electrode lines of the row electrode group or the column electrode group connected to the active device array and the COM electrode, the active devices connected to the part of the electrode lines maintain the off state, and the impact of the touch signal on display is eliminated.

5. The touch display according to claim 1, wherein
the active device array on the substrate of the display screen is a Thin Film Transistor (TFT) array, row and column electrode lines are respectively connected to gates and sources of TFTs, or respectively connected to the gates and drains of the TFTs, and due to the transient potential difference of the applied touch signal between electrode lines of the row electrode group and the column electrode group connected to the TFT array, all or a part of the TFTs of the display screen maintain the off state.

6. The touch display according to claim 1, wherein
the active device array on the substrate of the display screen is a TFT array, row and column electrode lines are respectively connected to gates and sources of TFTs, or respectively connected to the gates and drains of the TFTs, and due to the transient potential difference of the applied touch signal between electrode lines connected to the gates of the TFTs in the row electrode lines or the column electrode lines and the COM electrode, all or a part of the active devices of the display screen maintain the off state.

7. The touch display according to claim 1 or 6, wherein
in terms of a touch signal relation between the electrodes to which the touch signal is applied, an average value of the potential difference between the electrodes remains unchanged, so as to avoid a perceptible change in display effect.

8. The touch display according to claim 1, wherein
during a time of transmitting the touch signal by the display screen electrode, the potential difference of the touch signal among the different electrode groups maintains constant.

9. The touch display according to claim 1, wherein
among the times of transmitting the touch signal by the display screen electrode, the potential difference of the touch signal among the different electrode groups remains unchanged.

10. The touch display according to claim 1, wherein
the touch signal applied to the row and column electrode groups or the COM electrode is an Alternating Current (AC) signal, or a composite signal of an AC signal and a Direct Current (DC) signal.

11. The touch display according to claim 10, wherein
a waveform of the AC signal component in the touch signal is one of a square wave, a sine wave, a triangular wave, a saw-tooth wave, and other AC waveforms.

12. The touch display according to claim 10, wherein
a frequency of the AC signal component in the touch signal is 10 kHz or above 10 kHz.

13. The touch display according to claim 1, wherein
the active display screen is one of a TFT Liquid Crystal Display (LCD) (TFT-LCD) or other active LCD screens, an active Organic Light Emitting Diode (OLED) display screen, and an active carbon nanotube display screen.
